# EUROPÄISCHE PATENTANMELDUNG

(11) **EP 4 470 813 A1**
(43) Veröffentlichungstag der Anmeldung: **04.12.2024**
(21) Anmeldenummer: 24184240.0
(22) Anmeldetag: 03.11.2016
(51) Int. Cl.: B60K 6/442, B60W 20/40, B60W 10/02, B60W 10/06, B60W 10/08, B60W 20/00

(54) **VERFAHREN ZUM BETREIBEN EINER ANTRIEBSEINRICHTUNG EINES HYBRIDFAHRZEUGES UND HYBRIDFAHRZEUG**

(30) Priorität: 17.11.2015 DE 102015222692
(62) Teilanmeldung aus: 16793813.3
(71) Anmelder: Volkswagen Aktiengesellschaft, 38436 Wolfsburg (DE)
(72) Erfinder: Felsch, Dr. Christian, 38104 Braunschweig (DE); Rieling, Dr. Jörg, 38116 Braunschweig (DE); Prochazka, David, 38446 Wolfsburg (DE); Zillmer, Michael, 38173 Cremlingen (DE)

(57) **Zusammenfassung**

Bereitgestellt ist ein Verfahren zum Betreiben einer Antriebseinrichtung (3, 203) eines Hybridfahrzeuges (1, 201) zum Antreiben eines Antriebsrads (15, 215), wobei die Antriebseinrichtung eine Verbrennungskraftmaschine (5, 205), eine mit der Verbrennungskraftmaschine gekoppelte erste Elektromaschine (9, 209), eine zweite Elektromaschine (11, 211), einen elektrischen Akkumulator (13, 213) und eine Hauptkupplung (17, K0) zwischen der Verbrennungskraftmaschine (5, 205) und dem Antriebsrad (15, 215) umfasst, wobei das Verfahren aufweist: Betreiben der Antriebseinrichtung (3, 203) in einem ersten Betriebsmodus der folgenden drei Betriebsmodi: einem rein elektrischen Betrieb, einem seriellen Hybridbetrieb, einem parallelen Hybridbetrieb; und zumindest einmal Wechseln von dem ersten Betriebsmodus in einen zweiten Betriebsmodus der drei Betriebsmodi, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht; wobei, wenn der erste Betriebsmodus der rein elektrische Betrieb ist und der zweite Betriebsmodus der serielle Hybridbetrieb ist, das Wechseln aufweist: bis zu einem ersten Zeitpunkt (t1) Betreiben der zweiten Elektromaschine (11, 211) im elektromotorischen Betrieb mit elektrischer Energie aus dem Akkumulator (13, 213); ab dem ersten Zeitpunkt (t1) und zumindest bis zu einem zweiten Zeitpunkt (t2), ab dem eine Drehzahl der Verbrennungskraftmaschine (5, 205) eine Startdrehzahlschwelle (113) erreicht oder übersteigt, Betreiben der ersten Elektromaschine (9, 209) im elektromotorischen Betrieb zum Erzeugen eines Drehmoments, um eine Drehzahl der Verbrennungskraftmaschine (5, 205) zu erhöhen; ab dem zweiten Zeitpunkt (12) Zuführen von Kraftstoff an die Verbrennungskraftmaschine (5, 205); ab einem dritten Zeitpunkt (t3), bei dem die Drehzahl der Verbrennungskraftmaschine (5, 205) eine Zieldrehzahl für den seriellen Betrieb erreicht oder übersteigt, Betreiben der ersten Elektromaschine (9, 209) im generatorischen Betrieb zum Erzeugen von elektrischer Energie; zwischen dem dritten Zeitpunkt (t3) und einem vierten Zeitpunkt (t4) Betreiben der zweiten Elektromaschine (11, 211) im elektromotorischen Betrieb durch zeitlich abnehmende Zuführung von elektrischer Energie aus dem Akkumulator (13, 213) und zeitlich zunehmende Zuführung von mittels der Verbrennungskraftmaschine (5, 205) über die erste Elektromaschine (9, 209) erzeugter elektrischer Energie; und ab dem vierten Zeitpunkt (t4) Betreiben der zweiten Elektromaschine (11, 211) im elektromotorischen Betrieb mit elektrischer Energie, die über die erste Elektromaschine (9, 209) mittels der Verbrennungskraftmaschine (5, 205) erzeugt wird.

## Beschreibung

Die vorliegende Erfindung betrifft ein Verfahren zum Steuern und/oder Betreiben einer Antriebseinrichtung eines Hybridfahrzeuges und ein Hybridfahrzeug, welches ausgebildet ist, das Verfahren zum Betreiben der Antriebseinrichtung des Hybridfahrzeuges auszuführen.

Eine Antriebseinrichtung eines Hybridfahrzeuges kann z. B. eine Verbrennungskraftmaschine und eine erste Elektromaschine und eine zweite Elektromaschine sowie einen elektrischen Akkumulator umfassen. Somit können verschiedene Antriebsaggregate zum Antreiben eines Antriebsrads verwendet werden.

Aus der deutschen Offenlegungsschrift DE 10 2013 001 095 A1 ist ein Verfahren zum Betreiben einer Hybridantriebseinrichtung bekannt, wobei die Hybridantriebseinrichtung eine mit einer ersten Achse des Kraftfahrzeugs wirkverbindbare Brennkraftmaschine, einen ebenfalls mit der ersten Achse wirkverbindbaren ersten Elektromotor sowie einen mit einer zweiten Achse des Kraftfahrzeugs wirkverbindbaren zweiten Elektromotor aufweist. Die zum Betreiben des zweiten Elektromotors verwendete elektrische Energie wird von dem von der Brennkraftmaschine unter Anhebung ihrer Leistung angetriebenen ersten Elektromotor erzeugt oder wird ausschließlich einem Energiespeicher für elektrische Energie entnommen.

Das europäische Patent EP 1 074 087 B1 offenbart ein Regelverfahren und eine Vorrichtung für die Brennkraftmaschine eines elektrischen Hybridfahrzeuges, wobei ein elektrischer Motor oder Motor/Generator zwischen der Maschine und dem kontinuierlichen variablen oder automatischen Getriebe angeordnet ist und wobei das Hybridfahrzeug eine Batterie und zugeordnete Steuerelemente aufweist. Dabei hält ein Steuermittel die Leistungsausgabe der Brennkraftmaschine im Wesentlichen entlang einer idealen Betriebslinie, wenn sich die Geschwindigkeit der Maschine ändert. Ein zweiter Elektromotor kann ferner vorgesehen sein und die Drehmomentausgabe des zweiten Elektromotors kann mittels einer Systemsteuerung variiert werden.

Die deutsche Offenlegungsschrift DE 10 2012 103 292 A1 offenbart ein Verfahren zum Betrieb eines elektrischen Antriebstranges eines Fahrzeuges, wobei mindestens zwei Elektromotoren, die jeweils mit einer Antriebsachse in Wirkverbindung stehen, und eine Steuereinrichtung vorgesehen sind, wobei ein Fahrerwunschmoment für einen motorischen oder generatorischen Betrieb ermittelt wird, und wobei bei einer vorliegenden Abtriebsdrehzahl eine erforderliche Gesamtleistung des elektrischen Abtriebstranges ermittelt wird, und wobei die Leistungen der einzelnen Elektromotoren ermittelt werden, und wobei die sich ergebenden Verlustleistungen der einzelnen Elektromotoren auf Basis von hinterlegten Verlustleistungskennfeldern für die einzelnen Elektromotoren minimiert werden.

Die deutsche Offenlegungsschrift DE 10 2009 019 485 A1 offenbart einen Antriebstrang mit einem ersten Elektromotor und einem Planetengetriebe und Fahrzeuge, die diesen Antriebstrang aufweisen. Der Antriebstrang weist eine erste elektrische Maschine, welche in einem motorischen oder generatorischen Betriebszustand betreibbar ist, und ein Planetengetriebe mit einer Drehzahländerungsvorrichtung auf, wobei das Planetengetriebe eine An- und eine Abtriebsseite aufweist und wobei die erste elektrische Maschine im motorischen oder generatorischen Betriebszustand steuernd in die Drehzahländerungsvorrichtung eingreift, so dass sich ein Übersetzungsverhältnis im Planetengetriebe ausbildet. Über die erste elektrische Maschine wird das Übersetzungsverhältnis des Planetengetriebes beeinflusst, wodurch zusätzlich auch der Arbeitspunkt der Verbrennungsmaschine bestimmt wird. Die Verbrennungskraftmaschine wird nahe ihres optimalen Wirkungsgrades betrieben. In einem rein elektrischen Betrieb arbeitet die zweite elektrische Maschine als Motor und die erste elektrische Maschine befindet sich im Leerlauf oder wird als Zusatzantrieb genutzt. Ein Teil der von der Verbrennungsmaschine erzeugten mechanischen Energie wird durch die erste elektrische Maschine in elektrische Energie umgewandelt und direkt an die zweite elektrische Maschine weitergeleitet. Beschleunigungen werden von der zweiten elektrischen Maschine unterstützt. Bei einer Verzögerung kann durch Rekuperation der Bremsenergie der Energiespeicher geladen werden.

Die Übersetzung der europäischen Patentschrift DE 602 23 850 T2 offenbart ein Verfahren zum Betrieb eines Antriebsystems eines Hybridfahrzeuges, wobei das Hybridfahrzeug eine Brennkraftmaschine, einen ersten Elektromotor/Generator, einen Planetengetriebemechanismus und einen zweiten Elektromotor/Generator umfasst. Ein Verhältnis zwischen einem ersten Moment, das durch die Brennkraftmaschine bei den Fahrzeugachsen erzeugt wird, und einem zweiten Moment, das durch den zweiten Elektromotor bei den Fahrzeugachsen bei jeder Zahnradposition der Übersetzung erzeugt wird, wird von einem ersten Verhältnis, wenn sowohl die Brennkraftmaschine als auch der zweite Elektromotor normal arbeiten, auf ein zweites Verhältnis, wenn entweder die Brennkraftmaschine oder der zweite Elektromotor gestört sind, geändert.

Die deutsche Offenlegungsschrift DE 10 2007 054 368 A1 offenbart eine Steuerarchitektur zur Auswahl eines optimalen Modus oder einer optimalen Übersetzung und Antriebsdrehzahl für ein Hybridantriebstrangsystem, welches eine Brennkraftmaschine, einen ersten und einen zweiten Elektromotor und ein elektromechanisches Getriebe umfasst, das selektiv betreibbar ist, um Drehmoment dazwischen zu übertragen und in mehreren Modi mit fester Übersetzung und stufenlos verstellbaren Modi betreibbar ist. Für jeden zulässigen Betriebsbereichszustand werden bevorzugte Betriebsbedingungen und bevorzugte Kosten bestimmt und darauf basierend ein bevorzugter Betriebsbereichszustand ausgewählt. Eine Kostenstrukturinformation, die in ein strategisches Managementeinrichtungssegment eingegeben und in einem Optimierungssegment verwendet wird, umfasst vorzugsweise Betriebskosten, die allgemein auf der Basis von Faktoren bestimmt werden, die mit den Fahrzeugfahreigenschaften, der Kraftstoffwirtschaftlichkeit, Emissionen und Batterielebensdauer für den bestimmten Drehmomentbereich in Beziehung stehen. Darüber hinaus werden Kosten in einem Kraftstoff- und elektrischen Energieverbrauch, die zu dem spezifischen Betriebspunkt des Antriebstrangsystems für das Fahrzeug gehören, zugewiesen und zugeordnet. Die optimalen Betriebskosten können bestimmt werden, indem ein Gesamtantriebstrangsystemverlust berechnet wird, welcher einen Ausdruck auf der Basis des Maschinenleistungsverlustes, der durch Kraftstoffwirtschaftlichkeit und Abgasemissionen angetrieben ist, plus Verlusten in dem mechanischen System, Verlusten in dem elektrischen System und Wärmeverluste umfasst.

Im Stand der Technik ist der Übergang des Antriebs von einem Antriebsaggregat auf ein anderes häufig mit Problemen assoziiert. Beispielsweise kann im Zug beim Übergang des Antriebs von einem Antriebsaggregat auf ein anderes eine Zugkraftunterbrechung auftreten.

Es ist daher eine Aufgabe der vorliegenden Erfindung, ein Verfahren zum Betreiben einer Antriebseinrichtung eines Hybridfahrzeuges sowie ein Hybridfahrzeug bereitzustellen, wobei ein Wechsel von einem Antriebsaggregat auf ein anderes Antriebsaggregat des Hybridfahrzeuges zuverlässig und sicher durchgeführt werden kann und ein Fahrkomfort gewährleistet werden kann.

Die Aufgabe wird durch die Gegenstände der unabhängigen Ansprüche gelöst, welche auf ein Verfahren zum Steuern und/oder Betreiben einer Antriebseinrichtung eines Hybridfahrzeuges und auf ein Hybridfahrzeug gerichtet sind. Die abhängigen Ansprüche spezifizieren besondere Ausführungsformen der vorliegenden Erfindung.

Gemäß einem ersten Aspekt der vorliegenden Erfindung ist ein Verfahren zum Betreiben einer Antriebseinrichtung eines Hybridfahrzeuges zum Antreiben eines Antriebsrads bereitgestellt, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst. Dabei weist das Verfahren auf:
Betreiben der Antriebseinrichtung in einem ersten Betriebsmodus der folgenden drei Betriebsmodi:
   einem rein elektrischen Betrieb, in dem ein auf das Antriebsrad wirkendes Fahrantriebsdrehmoment mittels der zweiten Elektromaschine bewirkt wird, während die Verbrennungskraftmaschine ausgeschaltet ist;
   einem seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken;
   einem parallelen Hybridbetrieb, in dem das Fahrantriebsdrehmoment mittels der Verbrennungskraftmaschine bewirkt wird;
zumindest einmal Wechseln von dem ersten Betriebsmodus in einen zweiten
Betriebsmodus der drei Betriebsmodi,
wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

Das Verfahren kann z. B. von einem Motorsteuergerät des Hybridfahrzeuges ausgeführt werden. Das Verfahren kann in Software und/oder Hardware implementiert werden. Insbesondere kann das Verfahren als ein Computerprogramm implementiert sein, welches in ein Motorsteuergerät des Hybridfahrzeuges geladen ist.

Die Antriebseinrichtung kann ein oder mehrere Antriebsräder des Hybridfahrzeuges antreiben. Die Verbrennungskraftmaschine kann z. B. einen Dieselmotor oder einen Ottomotor umfassen sowie einen Kraftstofftank, wobei Kraftstoff den Verbrennungsräumen der Verbrennungskraftmaschine kontrolliert zugeführt werden kann.

Die erste Elektromaschine und auch die zweite Elektromaschine können sowohl im elektromotorischen Betrieb (in dem sie ein Antriebsdrehmoment auf einen Antriebsstrang und/oder das Antriebsrad übertragen) als auch in einem generatorischen Betrieb betrieben werden (in welchem sie mechanisch angetrieben werden und elektrische Energie erzeugen). Die erste Elektromaschine kann vorwiegend im generatorischen Betrieb und die zweite Elektromaschine kann vorwiegend im elektromotorischen Betrieb betrieben werden. Die erste Elektromaschine kann bisweilen auch als Generator bezeichnet werden und die zweite Elektromaschine kann bisweilen auch als Traktionsmaschine bezeichnet werden. Die Antriebseinrichtung kann weitere Betriebsmodi über die drei definierten Betriebsmodi hinaus aufweisen.

In einem Koordinatensystem, welches die Geschwindigkeit des Fahrzeuges (oder die Antriebsradumdrehungszahl) über der Antriebsleistung (oder dem Antriebsdrehmoment) darstellt, können die drei verschiedenen Betriebsmodi in verschiedenen Bereichen des Koordinatensystems ausgeführt werden.

In dem rein elektrischen Betrieb kann das auf das Antriebsrad wirkende Fahrantriebsdrehmoment ausschließlich mittels der zweiten Elektromaschine bewirkt sein. Die erste Elektromaschine kann in diesem Fall ausgeschaltet sein. In diesem Betriebsmodus kann die zweite Elektromaschine ausschließlich durch elektrische Energie des Akkumulators gespeist werden.

In dem seriellen Hybridbetrieb kann das auf das Antriebsrad wirkende Fahrantriebsdrehmoment ausschließlich mittels der zweiten Elektromaschine erzeugt sein. Dabei braucht die zweite Elektromaschine keine elektrische Energie aus dem Akkumulator zu beziehen, sondern kann elektrische Energie ausschließlich durch von der ersten Elektromaschine erzeugte elektrische Energie beziehen, wobei die erste Elektromaschine im generatorischen Betrieb arbeitet und mechanisch von der Verbrennungskraftmaschine angetrieben wird. In anderen Ausführungsformen kann in dem seriellen Hybridbetrieb die zweite Elektromaschine zumindest teilweise auch Energie von dem Akkumulator beziehen, wobei der Betrieb als Boost-Betrieb (während des seriellen Hybridbetriebs) bezeichnet werden kann.

In dem parallelen Hybridbetrieb kann das Fahrantriebsdrehmoment ausschließlich von der Verbrennungskraftmaschine erzeugt werden. In anderen Ausführungsformen können auch in dem parallelen Hybridbetrieb die erste Elektromaschine und/oder die zweite Elektromaschine teilweise zum Fahrantriebsdrehmoment beitragen, wobei der Betrieb als Boost-Betrieb (während des parallelen Hybridbetriebs) bezeichnet werden kann.

Das Wechseln von dem ersten Betriebsmodus in den zweiten Betriebsmodus kann durch Steuern der Verbrennungskraftmaschine, der ersten Elektromaschine und der zweiten Elektromaschine über einige Zeitpunkte hinweg erfolgen. Der Wechsel kann z. B. innerhalb einer Zeitspanne von 0,2 Sekunden bis 2 Sekunden, insbesondere etwa 0,4 Sekunden erfolgen, ohne dass die vorliegende Erfindung in dieser Hinsicht beschränkt sein soll. Der Wechsel von dem ersten Betriebsmodus zu dem zweiten Betriebsmodus kann dabei automatisch ohne manuellen Eingriff des Fahrers bzw. der Fahrerin erfolgen. Der Wechsel von dem ersten Betriebsmodus zu dem zweiten Betriebsmodus kann durch ein (sich änderndes) angefordertes Sollantriebsdrehmoment (z. B. angezeigt durch eine Gaspedalstellung) und/oder durch eine (sich ändernde) Geschwindigkeit des Hybridfahrzeuges (oder Antriebsradumdrehungszahl) ausgelöst sein. Der Wechsel von dem ersten Betriebsmodus zu dem zweiten Betriebsmodus kann auch systembedingt ausgelöst sein. Beispielsweise kann ein Wechsel aus dem rein elektrischen Betrieb in einen Hybridbetrieb aufgrund des Unterschreitens eines minimal zulässigen Ladezustands des Akkumulators ausgelöst sein. In dem ersten Betriebsmodus kann z. B. eine erste Fahrgeschwindigkeit und eine erste Raddrehzahl und ein erstes Raddrehmoment (das heißt erstes Fahrantriebsdrehmoment) vorliegen. Nach dem Wechseln kann in dem zweiten Betriebsmodus eine zweite Fahrgeschwindigkeit, eine zweite Raddrehzahl und ein zweites Fahrantriebsmoment vorliegen, wobei z. B. für den Fall einer Konstant(geschwindigkeit)fahrt in der Ebene die erste Fahrgeschwindigkeit (im Wesentlichen) der zweiten Fahrgeschwindigkeit entspricht und/oder gleicht, wobei die erste Raddrehzahl (im Wesentlichen) der zweiten Raddrehzahl entspricht und/oder gleicht und wobei das erste Fahrantriebsdrehmoment (im Wesentlichen) dem zweiten Fahrantriebsdrehmoment entspricht und/oder gleicht. Insbesondere kann z. B. für den Fall einer Konstantfahrt in der Ebene die während des Wechsels von dem ersten Betriebsmodus zu dem zweiten Betriebsmodus vorliegende Fahrgeschwindigkeit der ersten und zweiten Fahrgeschwindigkeit (im Wesentlichen) entsprechen und/oder gleichen, die während des Wechsels von dem ersten Betriebsmodus zu dem zweiten Betriebsmodus vorliegende Raddrehzahl der ersten und zweiten Raddrehzahl (im Wesentlichen) entsprechen und/oder gleichen und das während des Wechsels von dem ersten Betriebsmodus zu dem zweiten Betriebsmodus vorliegende Fahrantriebsdrehmoment dem ersten und zweiten Fahrantriebsdrehmoment (im Wesentlichen) entsprechen und/oder gleichen. Somit braucht ein Fahrer bzw. eine Fahrerin nicht bemerken, dass ein Betriebsartenwechsel durchgeführt wird, da keine Geschwindigkeitsänderung und auch keine Beschleunigung (oder keine Beschleunigungsänderung) während des Wechsels auftritt. Somit kann ein Fahrkomfort verbessert werden und gleichzeitig kann die Antriebseinrichtung z. B. hinsichtlich eines Energieverbrauchs (nahezu) optimal betrieben werden.

Insgesamt sind sechs mögliche Übergänge bzw. Wechsel von einem ersten Betriebsmodus in einen zweiten Betriebsmodus möglich. Die Übergänge bzw. Wechsel zwischen einem ersten Betriebsmodus und einem zweiten Betriebsmodus werden hier nicht als eigenständige Betriebsmodi bezeichnet, sondern werden in dieser Anmeldung als (Betriebsarten)Wechsel bzw. (Betriebsarten)Übergänge bezeichnet. Die Wechsel bzw. Übergänge können von relativ kurzer Dauer (das heißt z. B. zwischen 0,1 und 1 Sekunde) andauern. Im Gegensatz dazu kann jeder der drei Betriebsmodi typischerweise über eine längere Zeitspanne andauern, z. B. zwischen 10 Sekunden und einigen Minuten oder einigen Stunden. Die Betriebsartenübergänge bzw. Betriebsartenwechsel können z. B. in der Ausprägung als zugkraftneutraler Betriebsartenübergang im Schub umgesetzt werden. Es existieren die Betriebsartenübergänge von einem rein elektrischen Betrieb auf einen seriellen Hybridbetrieb, von einem rein elektrischen Betrieb auf einen parallelen Hybridbetrieb und von einem parallelen Hybridbetrieb auf einen seriellen Hybridbetrieb. Ferner existieren die umgekehrten Betriebsartenübergänge. Auch diese umgekehrten Betriebsartenübergänge können als zugkraftneutrale Betriebsartenübergänge im Schub umgesetzt werden.

Im Folgenden werden Zeitpunkte eines Betriebsartenwechsels von dem rein elektrischen Betrieb auf den seriellen Betrieb als erster Zeitpunkt, zweiter Zeitpunkt, dritter Zeitpunkt, vierter Zeitpunkt und fünfter Zeitpunkt bezeichnet. Zeitpunkte während eines Betriebsartenwechsels von dem rein elektrischen Betrieb auf den parallelen Betrieb werden im Folgenden als weiterer erster Zeitpunkt, weiterer zweiter Zeitpunkt, weiterer dritter Zeitpunkt, weiterer vierter Zeitpunkt, weiterer fünfter Zeitpunkt und weiterer sechster Zeitpunkt bezeichnet. Zeitpunkte während eines Betriebsratenwechsels von dem parallelen Hybridbetrieb auf den seriellen Hybridbetrieb werden im Folgenden als noch weiterer erster Zeitpunkt, noch weiterer zweiter Zeitpunkt und noch weiterer dritter Zeitpunkt bezeichnet.

Der Verlauf zwischen dem vor und nach dem Wechsel (von dem ersten Betriebsmodus in den zweiten Betriebsmodus) bereitgestellten Fahrantriebsdrehmoment kann einem Fahrerwunsch entsprechen und/oder durch einen Fahrerwunsch definiert sein. Der Fahrerwunsch kann z. B. durch eine Stellung eines Fahrhebel (insbesondere Fahrpedals) und oder eines Bremshebels (insbesondere Bremspedal) vom Fahrer definiert werden. Der Fahrerwunsch kann z. B. ein Beschleunigen oder ein Abbremsen oder eine Konstantgeschwindigkeit sein.

Der erste Betriebsmodus kann z. B. der rein elektrische Betrieb sein und der zweite Betriebsmodus kann der serielle Hybridbetrieb sein. In diesem Fall kann bis zu einem ersten Zeitpunkt (bis zu dem die Verbrennungskraftmaschine ausgeschaltet sein kann) die zweite Elektromaschine im elektromotorischen Betrieb mit elektrischer Energie aus dem Akkumulator betrieben werden, wobei elektrische Energie aus dem Akkumulator ausschließlich der zweiten Elektromaschine zugeführt werden kann. Die erste Elektromaschine kann bis zum ersten Zeitpunkt ausgeschaltet sein. Ab dem ersten Zeitpunkt und zumindest bis zu einem zweiten Zeitpunkt, ab dem eine Drehzahl der Verbrennungskraftmaschine eine Startdrehzahlschwelle erreicht (das heißt entspricht und/oder gleicht) oder übersteigt (das heißt größer ist als die Startdrehzahlschwelle), wird die erste Elektromaschine im elektromotorischen Betrieb zum Erzeugen eines Drehmoments betrieben, um eine Drehzahl der Verbrennungskraftmaschine (zum Starten derselben) zu erhöhen. Die erste Elektromaschine kann dazu mechanisch an die Verbrennungskraftmaschine (insbesondere mit einer Kurbelwelle der Verbrennungskraftmaschine) gekoppelt sein. Damit kann ein Starten der Verbrennungskraftmaschine bewirkt werden.

Ab dem zweiten Zeitpunkt kann Kraftstoff an die Verbrennungskraftmaschine zugeführt werden. Ferner kann (komprimierte) Luft der Verbrennungskraftmaschine zugeführt werden. Damit kann die Verbrennungskraftmaschine selbst zur weiteren Drehzahlanhebung der Einheit aus Verbrennungskraftmaschine und erster Elektromaschine beitragen. Ab einem dritten Zeitpunkt, bei dem die Drehzahl der Verbrennungskraftmaschine eine Zieldrehzahl für den seriellen Betrieb erreicht (das heißt dieser Zieldrehzahl entspricht und/oder dieser Zieldrehzahl gleicht) oder übersteigt (das heißt größer ist als die Zieldrehzahl) kann die erste Elektromaschine im generatorischen Betrieb zum Erzeugen von elektrischer Energie betrieben werden. Dabei kann die elektrische Energie der zweiten Elektromaschine zugeführt werden. Zwischen dem dritten Zeitpunkt und einem vierten Zeitpunkt kann die zweite Elektromaschine im elektromotorischen Betrieb durch zeitlich abnehmende Zuführung von elektrischer Energie aus dem Akkumulator und zeitlich zunehmende Zuführung von mittels der Verbrennungskraftmaschine über die erste Elektromaschine erzeugter elektrischer Energie betrieben werden. Zwischen dem dritten Zeitpunkt und dem vierten Zeitpunkt kann somit elektrische Energie sowohl aus dem Akkumulator als auch von der ersten Elektromaschine der zweiten Elektromaschine zugeführt werden.

Ab dem vierten Zeitpunkt kann die zweite Elektromaschine im elektromotorischen Betrieb mit elektrischer Energie betrieben werden, die über die erste Elektromaschine mittels der Verbrennungskraftmaschine erzeugt wird. Insbesondere kann die zweite Elektromaschine durch elektrische Energie betrieben werden, die ausschließlich von der ersten Elektromaschine erzeugt ist, wobei die erste Elektromaschine durch die Verbrennungskraftmaschine mechanisch angetrieben wird.

Damit kann ausgehend von dem rein elektrischen Betrieb zunächst die Verbrennungskraftmaschine gestartet werden und nach Erreichen der Zieldrehzahl für den seriellen Hybridbetrieb zunehmend die erste Elektromaschine antreiben, welche somit zunehmend (das heißt ansteigend) elektrische Energie erzeugt, welche der zweiten Elektromaschine zugeführt wird.

Der serielle Hybridbetrieb kann mit oder ohne Lastpunktanhebung durchgeführt werden. Falls der serielle Betrieb mit Lastpunktanhebung durchgeführt wird, kann zwischen dem vierten Zeitpunkt und einem fünften Zeitpunkt die Leistungsabgabe der Verbrennungskraftmaschine auf eine Sollleistung erhöht werden, die um eine Lastpunkterhöhungsleistung oberhalb einer Sollantriebsleistung liegt. Ab dem fünften Zeitpunkt kann ein Laden des Akkumulators mit einer der Lastpunkerhöhungsleistung entsprechenden Ladeleistung durchgeführt werden. Das Laden des Akkumulators kann optional durchgeführt werden.

Wenn der erste Betriebsmodus der rein elektrische Betrieb ist und der zweite Betriebsmodus der parallele Hybridbetrieb ist, kann das Wechseln bis zu einem weiteren vierten Zeitpunkt ein Offenhalten der Hauptkupplung aufweisen (zwischen der Verbrennungskraftmaschine und dem Antriebsrad). Ferner kann die zweite Elektromaschine im elektromotorischen Betrieb bis zu einem weiteren ersten Zeitpunkt betrieben werden, und zwar mit elektrischer Energie aus dem Akkumulator. Insbesondere kann der zweiten Elektromaschine ausschließlich Energie aus dem Akkumulator bis zu dem weiteren ersten Zeitpunkt zugeführt werden.

Ab dem weiteren ersten Zeitpunkt und zumindest bis zu einem weiteren zweiten Zeitpunkt, ab dem eine Drehzahl der Verbrennungskraftmaschine eine Startdrehzahlschwelle erreicht (das heißt insbesondere entspricht und/oder gleicht) oder übersteigt (das heißt größer ist als die Startdrehzahlschwelle) kann die erste Elektromaschine im elektromotorischen Betrieb zum Erzeugen eines Drehmoments betrieben werden, um eine Drehzahl der Verbrennungskraftmaschine zu erhöhen. Dazu kann die erste Elektromaschine mechanisch mit der Verbrennungskraftmaschine (insbesondere mit einer Kurbelwelle der Verbrennungskraftmaschine) gekoppelt sein. Damit kann ein Starten der Verbrennungskraftmaschine bewirkt werden. Ab dem weiteren zweiten Zeitpunkt kann an die Verbrennungskraftmaschine Kraftstoff (und Luft), insbesondere in kontrollierter Weise, zugeführt werden. Die Menge von zugeführtem Kraftstoff (und/oder Luft) kann ein von der Verbrennungskraftmaschine erzeugbares Drehmoment festlegen. Damit kann die Verbrennungskraftmaschine selbst zur weiteren Drehzahlanhebung der Einheit aus Verbrennungskraftmaschine und erster Elektromaschine beitragen.

Ab einem weiteren dritten Zeitpunkt, bei dem die Drehzahl der Verbrennungskraftmaschine eine Zieldrehzahl für den parallelen Hybridbetrieb erreicht oder übersteigt, kann die erste Elektromaschine im generatorischen Betrieb betrieben werden. Bis zu dem weiteren vierten Zeitpunkt kann die erste Elektromaschine im generatorischen Betrieb betrieben werden, um die Drehzahl der Verbrennungskraftmaschine auf die Zieldrehzahl für den parallelen Betrieb zu bringen (insbesondere zu reduzieren), falls zum weiteren dritten Zeitpunkt die Drehzahl der Verbrennungskraftmaschine die Zieldrehzahl für den parallelen Hybridbetrieb übersteigt. Die Verfahrensschritte zwischen dem weiteren dritten Zeitpunkt und dem weiteren vierten Zeitpunkt können ausgelassen werden, falls beim dritten weiteren Zeitpunkt die Drehzahl der Verbrennungskraftmaschine der Zieldrehzahl für den parallelen Hybridbetrieb entspricht und/oder gleicht.

Bei dem weiteren vierten Zeitpunkt kann die Hauptkupplung geschlossen werden. Ab dem weiteren vierten Zeitpunkt kann die Verbrennungskraftmaschine mit der Zieldrehzahl für den parallelen Hybridbetrieb betrieben werden. Zwischen dem weiteren vierten Zeitpunkt und einem weiteren fünften Zeitpunkt kann das Fahrantriebsdrehmoment zeitlich zunehmend durch von der Verbrennungskraftmaschine erzeugtem Drehmoment und zeitlich abnehmend durch von der zweiten Elektromaschine erzeugtem Drehmoment erzeugt werden. Damit kann eine Leistungsüberblendung bzw. Drehmomentüberblendung zwischen dem weiteren vierten Zeitpunkt und dem weiteren fünften Zeitpunkt durchgeführt werden.

Ab dem weiteren fünften Zeitpunkt kann das Fahrantriebsdrehmoment ausschließlich mittels der Verbrennungskraftmaschine erzeugt sein.

Ab dem weiteren fünften Zeitpunkt kann die Leistung der Verbrennungskraftmaschine um eine Lastpunkterhöhungsleistung über eine Sollantriebsleistung hinaus erhöht werden und der Akkumulator kann mit einer der Lastpunkterhöhungsleistung entsprechenden Ladeleistung geladen werden. Damit kann in dem parallelen Hybridbetrieb optional der Akkumulator geladen werden. Eine Lastpunkterhöhung kann z. B. durchgeführt werden, falls ein Ladezustand des Akkumulators unterhalb einer Minimalschwelle liegt. Andere Kriterien können hinzukommen oder ein auf dem Ladezustand basierendes Kriterium ersetzen.

Der erste Betriebsmodus kann der parallele Hybridbetrieb sein und der zweite Betriebsmodus kann der serielle Hybridbetrieb sein, wobei das Wechseln bis zu einem noch weiteren ersten Zeitpunkt bei geschlossener Hauptkupplung Erzeugen des Fahrantriebsdrehmoments mittels der Verbrennungskraftmaschine aufweist, während die zweite Elektromaschine ausgeschaltet ist. Bis zu dem noch weiteren ersten Zeitpunkt kann oder braucht die zweite Elektromaschine jedenfalls nicht im elektromotorischen Betrieb betrieben werden. Ab dem noch weiteren ersten Zeitpunkt bis zu einem noch weiteren zweiten Zeitpunkt kann die erste Elektromaschine im generatorischen Betrieb betrieben werden, um eine zeitlich zunehmende elektrische Energie zu erzeugen, während die erste Elektromaschine mechanisch von der Verbrennungskraftmaschine angetrieben wird. Ferner kann der Wechsel von dem parallelen Hybridbetrieb zu dem seriellen Hybridbetrieb ein Verwenden der zeitlich zunehmenden elektrischen Leistung umfassen, um mittels der zweiten Elektromaschine ein zeitlich zunehmendes Drehmoment auf das Antriebsrad zu übertragen. Bei dem noch weiteren zweiten Zeitpunkt kann die Hauptkupplung geöffnet werden. Ab dem noch weiteren zweiten Zeitpunkt kann ferner das Fahrantriebsdrehmoment ausschließlich (oder zumindest im Wesentlichen ausschließlich) mittels der zweiten Elektromaschine erzeugt werden.

Zwischen dem noch weiteren zweiten Zeitpunkt und einem noch weiteren dritten Zeitpunkt kann die Drehzahl der Verbrennungskraftmaschine verändert werden, um eine Zieldrehzahl für den seriellen Betrieb zu erreichen. Damit kann z. B. ein optimaler Betriebspunkt für die Verbrennungskraftmaschine eingestellt werden, welcher z. B. einen Energieverbrauch minimiert.

Die Antriebseinrichtung kann eine Hauptkupplung umfassen, die zwischen der Verbrennungskraftmaschine und dem Antriebsrad angeordnet sein kann, wobei die Hauptkupplung im rein elektrischen Betrieb und/oder im seriellen Hybridbetrieb geöffnet werden kann. Die Antriebseinrichtung kann ferner eine erste Kupplung umfassen, die zwischen der ersten Elektromaschine und der Verbrennungskraftmaschine (und dem Antriebsrad) angeordnet sein kann, wobei die erste Kupplung im rein elektrischen Betrieb und/oder im parallelen Hybridbetrieb geöffnet werden kann. Die Antriebsrichtung kann ferner eine zweite Kupplung umfassen, die zwischen der zweiten Elektromaschine und dem Antriebsrad angeordnet sein kann, wobei die zweite Kupplung im parallelen Hybridbetrieb geöffnet werden kann. Damit können selektiv die Verbrennungskraftmaschine, die erste Elektromaschine und/oder die zweite Elektromaschine während der verschiedenen Betriebsmodi und/oder während der Betriebsartenübergänge optional von dem Antriebsrad abgekoppelt bzw. an das Antriebsrad gekoppelt werden.

Der Wechsel von dem rein elektrischen Betrieb in den seriellen Hybridbetrieb wird gemäß manchen Ausführungsformen der vorliegenden Erfindung nur durchgeführt, falls sowohl die Fahrgeschwindigkeit unterhalb einer Fahrgeschwindigkeitsschwelle (und/oder die Antriebsraddrehzahl unterhalb einer Drehzahlschwelle) liegt als auch eine Sollantriebsleistung und/oder ein Sollantriebsdrehmoment oberhalb einer Elektrischer-Betrieb-Schwelle (z. B. Elektrischer-Betrieb-Drehmomentschwelle und/oder Elektrischer-Betrieb-Leistungsschwelle) liegt. Der Wechsel von dem rein elektrischen Betrieb in den parallelen Hybridbetrieb wird gemäß manchen Ausführungsformen der vorliegenden Erfindung nur durchgeführt, falls sowohl die Fahrgeschwindigkeit oberhalb einer Fahrgeschwindigkeitsschwelle (und/oder die Antriebsraddrehzahl oberhalb einer Drehzahlschwelle) liegt als auch eine Sollantriebsleistung und/oder ein Sollantriebsdrehmoment oberhalb einer weiteren Elektrischer-Betrieb-Schwelle Schwelle (z. B. weitere Elektrischer-Betrieb-Drehmomentschwelle und/oder weitere Elektrischer-Betrieb-Leistungsschwelle) liegt. Der Wechsel von dem parallelen Hybridbetrieb in den seriellen Hybridbetrieb wird gemäß manchen Ausführungsformen der vorliegenden Erfindung nur durchgeführt, falls sowohl die Fahrgeschwindigkeit oberhalb einer Fahrgeschwindigkeitsschwelle (und/oder die Antriebsraddrehzahl oberhalb einer Drehzahlschwelle) liegt als auch eine Sollantriebsleistung und/oder ein Sollantriebsdrehmoment oberhalb einer Parallelhybridbetrieb-Schwelle Schwelle (z. B. Parallelhybridbetrieb-Drehmomentschwelle und/oder Parallelhybridbetrieb-Leistungsschwelle) liegt. Durch die erläuterte Abgrenzung der drei Betriebsmodi kann ein Energieverbrauch vermindert bzw. insbesondere minimiert werden.

Bei Betreiben der Antriebseinrichtung im seriellen Hybridbetrieb kann die Verbrennungskraftmaschine an einem Arbeitspunkt basierend auf einem kombinierten Wirkungsgrad betrieben werden, welcher von dem Wirkungsgrad der Verbrennungskraftmaschine und von dem Wirkungsgrad der ersten Elektromaschine abhängt. Damit kann sowohl die Effektivität der Verbrennungskraftmaschine als auch die Effektivität des Wandels der mechanischen Energie in elektrische Energie mittels der ersten Elektromaschine berücksichtigt werden, um einen optimalen Arbeitspunkt und/oder Betriebspunkt der Verbrennungskraftmaschine aufzufinden und die Verbrennungskraftmaschine bei diesem optimalen Betriebspunkt zu betreiben.

Der Wirkungsgrad der Verbrennungskraftmaschine kann z. B. unter Verwendung eines (z. B. experimentell ermittelten) spezifischen Kraftstoffverbrauchs (z. B. verbrauchte Kraftstoffmasse geteilt durch erzeugte Energie z. B. gemessen in Einheiten g/kWh) bestimmt sein. Der Wirkungsgrad der Verbrennungskraftmaschine kann umso höher sein, je geringer der spezifische Kraftstoffverbrauch ist. Der spezifische Kraftstoffverbrauch kann z. B. in Abhängigkeit von einer Drehzahl und einem Drehmoment oder einer Leistung der Verbrennungskraftmaschine bestimmt sein und/oder davon abhängen. Linien gleichen spezifischen Kraftstoffverbrauchs (sogenannte Iso-Linien) können z. B. in einem Koordinatensystem, welches die Drehzahl der Verbrennungskraftmaschine gegen das Drehmoment und/oder die Leistung der Verbrennungskraftmaschine aufträgt, dargestellt werden. In dem gleichen Koordinatensystem können z. B. auch Iso-Kurven für verschiedene Ausgangsleistungen eingetragen sein.

Während des seriellen Betriebs treibt die Verbrennungskraftmaschine die erste Elektromaschine an, welche im generatorischen Betrieb elektrische Energie erzeugt, wobei die so erzeugte elektrische Energie der zweiten Elektromaschine zugeführt wird, um das Antriebsrad anzutreiben. Die Berücksichtigung des Wirkungsgrads der ersten Elektromaschine trägt Verlusten der Umwandlung der von der Verbrennungskraftmaschine bereitgestellten mechanischen Energie in elektrische Energie Rechnung, die mittels der ersten Elektromaschine erfolgt. Der basierend auf dem kombinierten Wirkungsgrad von erster Elektromaschine und Verbrennungskraftmaschine erhaltene Arbeitspunkt der Verbrennungskraftmaschine kann sich von dem Arbeitspunkt unterscheiden, der rein auf dem Wirkungsgrad der Verbrennungskraftmaschine basierend bestimmt werden würde. Insbesondere kann der basierend auf dem kombinierten Wirkungsgrad erhaltene Arbeitspunkt bei gegebener Sollantriebsleistung und/oder gegebenem Sollantriebsdrehmoment zu höheren Drehzahlen und/oder zu niedrigeren Drehmomenten der Verbrennungskraftmaschine verschoben sein. Damit kann das Hybridfahrzeug bzw. dessen Antriebseinrichtung energieeffizienter und insbesondere auch CO₂-optimiert im seriellen Hybridbetrieb betrieben werden.

Der Arbeitspunkt kann eine Extremstelle des kombinierten Wirkungsgrads für eine gegebene Sollleistung und/oder ein gegebenes Solldrehmoment sein. Die Extremstelle kann dabei das Argument bzw. die Argumente (z. B. Drehzahl und Drehmoment) angeben, bei denen der kombinierte Wirkungsgrad ein Extremum (z. B. Minimum oder Maximum) annimmt. Wird der Wirkungsgrad z. B. basierend auf dem spezifischen Kraftstoffverbrauch dargestellt, kann die Stelle der Argumente bzw. des Arguments (z. B. Drehzahl und Drehmoment) bestimmt werden, bei denen der kombinierte Wirkungsgrad ein Maximum annimmt. Damit ist bei manchen Ausführungsformen eine einfache Vorschrift zur Bestimmung des Arbeitspunktes gegeben. Die Wirkungsgrade der Verbrennungsmaschine und der ersten Elektromaschine können zuvor experimentell und/oder durch Simulation bestimmt worden sein und sie können insbesondere über alle möglichen Betriebsbereiche bestimmt worden sein.

Gemäß einem zweiten Aspekt der vorliegenden Erfindung ist ein Hybridfahrzeug bereitgestellt, welches aufweist:
eine Antriebseinrichtung zum Antreiben eines Antriebsrads des Hybridfahrzeuges, wobei die Antriebseinrichtung eine Verbrennungskraftmaschine, eine mit der
   Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst; und
eine Antriebseinrichtungssteuerung, welche ausgebildet ist, ein Verfahren gemäß einer der vorangehenden Ausführungsformen auszuführen oder zu steuern.

Es sollte verstanden werden, dass Merkmale, welche individuell oder in irgendeiner Kombination im Zusammenhang mit einem Verfahren zum Betreiben einer Antriebseinrichtung eines Hybridfahrzeuges beschrieben, erwähnt, bereitgestellt oder angewendet wurden, individuell oder in irgendeiner Kombination auch auf ein Hybridfahrzeug angewendet werden können, gemäß Ausführungsformen der vorliegenden Erfindung, und umgekehrt. Ausführungsformen der vorliegenden Erfindung werden nun mit Bezug auf die angehängten Zeichnungen erläutert. Die Erfindung ist nicht auf die beschriebenen oder illustrierten Ausführungsformen beschränkt.
- Fig. 1: illustriert schematisch ein Hybridfahrzeug gemäß einer Ausführungsform der vorliegenden Erfindung, welches ausgebildet ist, ein Verfahren gemäß einer Ausführungsform der vorliegenden Erfindung auszuführen;
- Fig. 2: illustriert schematisch ein Hybridfahrzeug gemäß einer anderen Ausführungsform der vorliegenden Erfindung, welches ausgebildet ist, ein Verfahren gemäß einer Ausführungsform der vorliegenden Erfindung auszuführen;
- Fig. 3: illustriert Kurven von von den in Fig. 1 oder 2 illustrierten Hybridfahrzeugen im parallelen Hybridbetrieb bereitgestelltem Drehmoment und Leistung;
- Fig. 4: illustriert schematisch ein Verfahren zum Betreiben einer Antriebseinrichtung eines Hybridfahrzeuges gemäß einer Ausführungsform der vorliegenden Erfindung;
- Fig. 5: illustriert verschiedene Betriebsmodi der in Fig. 1 und 2 illustrierten Hybridfahrzeuge, welche in einem Verfahren gemäß einer Ausführungsform der vorliegenden Erfindung eingesetzt werden;
- Fig. 6: illustriert Verfahrensschritte bei einem Betriebsartenübergang von einem rein elektrischen Fahrbetrieb auf seriellen Hybridbetrieb gemäß einer Ausführungsform der vorliegenden Erfindung;
- Fig. 7: illustriert Verfahrensschritte während eines Betriebsartenübergangs von einem rein elektrischen Fahrbetrieb auf einen parallelen Hybridbetrieb gemäß einer Ausführungsform der vorliegenden Erfindung, und
- Fig. 8: illustriert Verfahrensschritte während eines Betriebsartenübergangs von einem parallelen Hybridbetrieb zu einem seriellen Hybridbetrieb gemäß einer Ausführungsform der vorliegenden Erfindung.

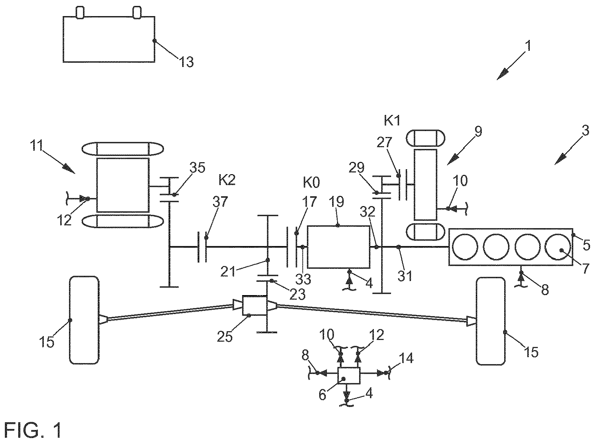

Das in Fig. 1 schematisch illustrierte Hybridfahrzeug 1 weist eine Antriebseinrichtung 3 auf sowie eine Antriebseinrichtungssteuerung 6, welche ausgebildet ist, ein Verfahren zum Steuern der Antriebseinrichtung 3 des Hybridfahrzeuges 1 gemäß einer Ausführungsform der vorliegenden Erfindung auszuführen. Die Antriebseinrichtung 3 umfasst eine Verbrennungskraftmaschine 5 mit mehreren Zylindern 7, eine erste Elektromaschine (auch als Generator bezeichnet) 9, eine zweite Elektromaschine (auch als Traktionsmaschine bezeichnet) 11 und einen Akkumulator 13, der über nicht illustrierte Energieversorgungskabel (und Leistungselektroniken) sowohl mit der ersten Elektromaschine 9 als auch der zweiten Elektromaschine 11 verbunden ist.

Die Antriebseinrichtung 3 ist zum Antrieb des Hybridfahrzeuges 1 in drei Betriebsmodi betreibbar. Erstens in einem rein elektrischen Betrieb, in dem ein Fahrantriebsdrehmoment (welches z. B. an den Antriebsrädern 15 anliegt) mittels der zweiten Elektromaschine 11 bewirkt wird, während die Verbrennungskraftmaschine 5 ausgeschaltet ist (ihr also insbesondere kein Kraftstoff aus einem nicht illustrierten Tank zugeführt wird). Zweitens ist die Antriebseinrichtung 3 in einem seriellen Hybridbetrieb betreibbar, in dem das Fahrantriebsdrehmoment mittels der zweiten Elektromaschine 11 bewirkt wird und die Verbrennungskraftmaschine 5 die erste Elektromaschine 9 zur Erzeugung von elektrischer Energie antreibt, welche wiederum der zweiten Elektromaschine 11 zugeführt wird (entweder direkt oder über den Akkumulator 13). Die Antriebseinrichtung 3 ist drittens in einem parallelen Hybridbetrieb betreibbar, in dem ein Fahrantriebsdrehmoment mittels der Verbrennungskraftmaschine 5 bewirkt wird und insbesondere die zweite Elektromaschine 11 und/oder die erste Elektromaschine 9 abgeschaltet sind.

In dem in Fig. 1 illustrierten Hybridfahrzeug 1 umfasst die Antriebseinrichtung 3 ferner eine Hauptkupplung K0 (17) sowie ein Getriebe 19, die beide zwischen der Verbrennungskraftmaschine 5 und einem Radantriebstrang 21 angeordnet sind. Der Radantriebstrang 21 ist über ein Differenzial 25 mit dazugehöriger Differenzialübersetzung 23 mit den Antriebsrädern 15 mechanisch verbunden. Die erste Elektromaschine 9 ist über eine erste Kupplung K1 (27) und über ein erstes Übersetzungselement 29 mit einer Ausgangswelle 31 der Verbrennungskraftmaschine 5 verbunden, wobei die Ausgangswelle 31 mechanisch mit einer Eingangswelle 32 des Getriebes 19 verbunden ist. Eine Ausgangswelle 33 des Getriebes 19 ist mit der Hauptkupplung K0 (17) verbunden. Die zweite Elektromaschine 11 ist über ein zweites Übersetzungselement 35 und eine zweite Kupplung K2 (37) mit dem Radantriebstrang 21 verbunden.

In dem Hybridfahrzeug 1 wird ein seriell-paralleles Hybridkonzept umgesetzt. Über eine Skalierung des Akkumulators 13 (auch als HV-Batterie bezeichnet) bezüglich des Energieinhalts und/oder der Leistung (Entlade- und Ladeleistung) kann das Hybridfahrzeug 1 als HEV (Hybrid Electric Vehicle) als auch als ein Plug-In-HEV (PHEV) ausgeführt sein. Die erste Elektromaschine 9 (auch als EM1 bezeichnet) ist z. B. bezüglich der Leistung und des Drehmoments derart dimensioniert, dass unter Berücksichtigung des Übersetzungsverhältnisses 29 von der Verbrennungskraftmaschine 5 zur ersten Elektromaschine 9 jeder mögliche verbrennungsmotorische Betriebspunkt (auch als Arbeitspunkt bezeichnet) im seriellen Betrieb eingestellt werden kann. Die zweite Elektromaschine 11 (auch als elektrischer Fahrmotor EM2 bezeichnet) ist bspw. bezüglich der Leistungsdimensionierung an die Leistungsdimensionierung der Verbrennungskraftmaschine 5 angelehnt, das heißt, sie kann eine ähnliche maximale Leistung bereitstellen.

Für einen parallelen Hybridbetrieb können Übersetzungen von der Verbrennungskraftmaschine zum Antriebsrad 15 in verschiedenartigen Weisen bzw. Ausprägungen vorgesehen sein (z. B. gestuft oder stufenlos), wobei hier mindestens eine Over-Drive-Übersetzung mit z. B. einer typischen Übersetzung von der Verbrennungskraftmaschine 5 zum Antriebsrad 15 von z. B. i = 2,8 vorgesehen ist, was bedeutet, dass, wenn sich die Ausgangswelle 31 der Verbrennungskraftmaschine 5 2,8 mal dreht, sich das Antriebsrad 15 einmal dreht.

Die Untersetzungen von dem Fahrmotor EM2 und dem Generator EM1 können in der Ausführungsform beispielsweise sowohl als Stirnradstufe als auch über ein (festgebremstes) Planetengetriebe umgesetzt werden. Über die Hauptkupplung K0 kann der parallele Leistungspfad (Welle 33) vom Antriebsrad 15 abgekoppelt werden. Der Fahrmotor EM2 und der Generator EM1 sind (optional) jeweils über die zweite Kupplung 37 (auch als K2 bezeichnet) und die erste Kupplung 27 (auch als K1 bezeichnet) abkoppelbar, um Schleppverluste zu reduzieren. Alle Kupplungen K0, K1 und K2 können beispielsweise als reibschlüssige Lammelenkupplungen und/oder formschlüssige Klauenkupplungen ausgeführt sein. Der Generator EM1 kann im Wesentlichen oder ausschließlich generatorisch arbeiten, er kann zum Start der Verbrennungskraftmaschine verwendet werden, oder er kann im parallelen Hybridbetrieb zur Boost-Unterstützung der Verbrennungskraftmaschine 5 verwendet werden. Der rein elektrische Betrieb (EV-Betrieb) und die Rekuperation können über den Fahrmotor EM2 (das heißt die zweite Elektromaschine) durchgeführt werden, während die Hauptkupplung K0 geöffnet ist und die zweite Kupplung K2 geschlossen ist.

In der folgenden Tabelle 1 sind die verschiedenen Betriebsmodi aufgeführt, in denen die Antriebseinrichtung 3 betreibbar ist, zusammen mit den jeweiligen Kopplungszuständen der Hauptkupplung K0, der ersten Kupplung K1 und der zweiten Kupplung K2.

**Tabelle 1:**

| **Betriebsmodus** | **K0** | **K1** | **K2** |
|---|---|---|---|
| EV-Betrieb | offen | beliebig | geschlossen |
| Rekuperation | offen | beliebig | geschlossen |
| Serieller Hybridbetrieb mit und ohne Lastpunktanhebung | offen | geschlossen | geschlossen |
| Paralleler Hybridbetrieb ohne Lastpunktanhebung | geschlossen | offen | offen |
| Paralleler Hybridbetrieb mit Lastpunktanhebung über EM1 | geschlossen | geschlossen | offen |
| Paralleler Hybridbetrieb mit Lastpunktanhebung über EM2 | geschlossen | offen | geschlossen |

Somit ist die Antriebseinrichtung 3 in einem rein elektrischen Betrieb (EV-Betrieb), einem seriellen Hybridbetrieb und einem parallelen Hybridbetrieb betreibbar. Sowohl der serielle Hybridbetrieb als auch der parallele Hybridbetrieb können dabei jeweils ohne oder mit Lastpunktanhebung ausgeführt werden, wie aus der obigen Tabelle 1 ersichtlich ist.

Über die direkte Anbindung der zweiten Elektromaschine 11 (EM2) an das Antriebsrad 15 sind ein effizienter elektrischer Antrieb und eine effiziente Rekuperation durchführbar.

Während des seriellen Hybridbetriebes kann auch schon bei sehr geringen Fahrzeuggeschwindigkeiten und/oder Raddrehzahlen die maximale verbrennungsmotorische Leistung zum Antrieb des Fahrzeug genutzt werden, da in diesem Fall die Hauptkupplung K0 geöffnet ist und daher die Drehzahl der Verbrennungskraftmaschine 5 unabhängig von der Fahrgeschwindigkeit optimal eingestellt werden kann. Aus dem rein elektrischen Betrieb heraus (EV-Betrieb) kann bei geöffneter Hauptkupplung K0 über die erste Elektromaschine 9 (Generator EM1) ein sehr komfortabler und zugkraftneutraler Verbrennungskraftmaschinen-Zustart erreicht werden.

Bei Bedarf einer zusätzlichen Lastpunktanhebung im parallelen Betrieb kann der dafür erforderliche generatorische Betrieb zur Erzeugung von elektrischer Leistung zur Aufladung des Akkumulators wahlweise über die zweite Elektromaschine 11 (Fahrmotor EM2) oder die erste Elektromaschine 9 (Generator EM1) durchgeführt werden. Im parallelen Hybridbetrieb ohne Bedarf einer zusätzlichen Lastpunktanhebung können in dem in Fig. 1 illustrierten Hybridfahrzeug 1 zur Minimierung der Schleppverluste die zweite Elektromaschine 11 (Fahrmotor EM2) und die erste Elektromaschine 9 (Generator EM1) durch Öffnung der zweiten Kupplung 37 (K2) und Öffnen der ersten Kupplung 27 (K1) abgekoppelt werden.

Die Auswahl des rein elektrischen Hybridbetriebs, des seriellen Hybridbetriebs und des parallelen Hybridbetriebs kann zum Zwecke der Verbrauchsminimierung die jeweiligen Effizienzen/Wirkungsgrade der Antriebsstrang-Komponenten berücksichtigen.

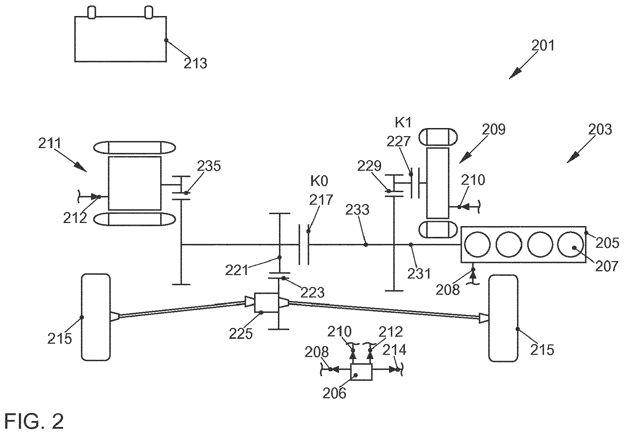

**Fig. 2** illustriert ein Hybridfahrzeug 201 gemäß einer weiteren Ausführungsform der vorliegenden Erfindung, wobei in Struktur und/oder Funktion ähnliche oder gleiche Komponenten in Fig. 1 und 2 mit Bezugszeichen bezeichnet sind, welche sich in den letzten beiden Stellen gleichen. Zur Vereinfachung sind in der folgenden Beschreibung teilweise die Bezugszeichen aus beiden Fig. 1 und 2 angegeben, wobei diese jeweils durch ein Komma getrennt sind.

Das in Fig. 2 illustrierte Hybridfahrzeug 201 kann als eine "vereinfachte" Systemtopologie ohne eine Abkoppelbarkeit von Fahrmotor EM2 und Generator EM1 sowie ohne ein Getriebe (gestuft oder stufenlos) aufgefasst werden, so dass nur eine Overdrive-Übersetzung von der Verbrennungskraftmaschine 205 zu dem Antriebsrad 215 vorhanden sein kann.

Im elektrischen Betrieb ist die Hauptkupplung K0 geöffnet. Verbrennungskraftmaschine und elektrischer Generator EM1 stehen still (Drehzahl = Null). Die Fahranforderung wird über den elektrischen Fahrmotor EM2 mit entsprechender Entnahme einer elektrischen Leistung aus der HV-Batterie bereitgestellt. Der hybridische Fahrbetrieb ist seriell und parallel darstellbar. Im seriellen Hybridbetrieb ist die Hauptkupplung K0 geöffnet. Die Drehzahl der Verbrennungskraftmaschine ist frei einstellbar. Die mechanische Leistung der Verbrennungskraftmaschine wird über den Generator EM1 in eine elektrische Leistung gewandelt. Diese elektrische Leistung wird bei entsprechendem Bedarf zur Nachladung der HV-Batterie genutzt sowie vom Fahrmotor EM2 zur Darstellung der Fahranforderung genutzt.

Im parallelen Hybridbetrieb ist die Hauptkupplung K0 geschlossen. Die Drehzahl der Verbrennungskraftmaschine ist über die Overdrive-Übersetzung an die Raddrehzahl gekoppelt. Die mechanische Leistung der Verbrennungskraftmaschine wird bei entsprechendem Bedarf über einen generatorischen Betrieb des elektrischen Generators EM1 zur Nachladung der HV-Batterie genutzt sowie mechanisch zur Darstellung der Fahranforderung direkt an das Rad übertragen.

Im parallelen Hybridbetrieb ohne Bedarf einer zusätzlichen Lastpunktanhebung kann der Generator EM1 zur Minimierung der Schleppverluste abgekoppelt werden (mit für Fahrer akzeptabler Dynamikeinbuße, zum Bsp. GRA- und/oder ACC-Betrieb). Bei einer noch weiteren Ausführungsform kann auch die erste Kupplung 227 fehlen.

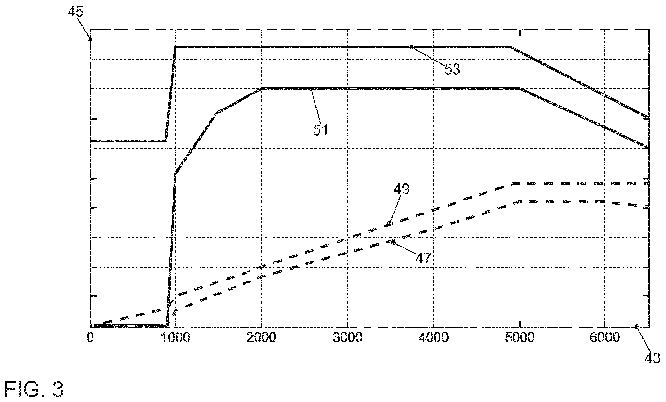

**Fig. 3** illustriert für den parallelen Hybridbetrieb in einem Koordinatensystem mit einer Abszisse 43, welche die Drehzahl der Verbrennungskraftmaschine 5, 205 in der Einheit 1/min illustriert, und mit einer Ordinate 45, welche die Leistung in der Einheit kW und/oder das Drehmoment in der Einheit Nm anzeigt, welches an der Eingangswelle 32 des Getriebes 19 bzw. einer Ausgangswelle 233 anliegt, eine Leistung 47 der Verbrennungskraftmaschine 5, 205, eine Systemleistung 49, ein Drehmoment 51 der Verbrennungskraftmaschine 5, 205 sowie ein Systemdrehmoment 53 der jeweiligen gesamten Antriebseinrichtung 3, 203. Die Systemleistung 49 und das Systemdrehmoment 53 sind unter Berücksichtigung einer elektrischen Boost-Unterstützung durch den Generator EM1 (und/oder den Fahrmotor EM2) definiert. Leistungs- und Drehmomentanforderungen (das heißt Sollleistungen bzw. Solldrehmomente) oberhalb der verbrennungsmotorischen Volllast können somit im parallelen Hybridbetrieb bis zur definierten Systemleistung 49 und bis zum definierten Systemdrehmoment 53 über einen kombinierten verbrennungs- und elektromotorischen Betrieb mit entsprechender elektrischen Leistungsentnahme aus dem Akkumulator (HV-Batterie) 13, 213 dargestellt werden.

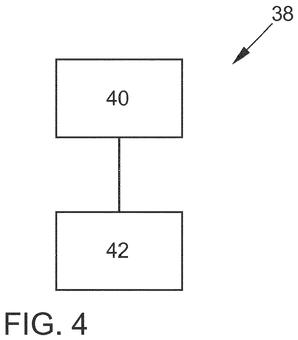

Das in Fig. 4 schematisch illustrierte Verfahren 38 zum Betreiben einer Antriebseinrichtung eines Hybridfahrzeuges gemäß einer Ausführungsform der vorliegenden Erfindung umfasst in einem Verfahrensschritt 40 ein Betreiben der Antriebseinrichtung, wie etwa der in Fig. 1 illustrierten Antriebseinrichtung 3 oder der in Fig. 2 illustrierten Antriebsvorrichtung 203, in einem ersten Betriebsmodus der folgenden drei Betriebsmodi:
einem rein elektrischen Betrieb, in dem ein auf das Antriebsrad wirkendes Fahrantriebsdrehmoment mittels der zweiten Elektromaschine bewirkt wird, während die Verbrennungskraftmaschine ausgeschaltet ist;
einem seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken;
einem parallelen Hybridbetrieb, in dem das Fahrantriebsdrehmoment mittels der Verbrennungskraftmaschine bewirkt wird.

Ferner umfasst das Verfahren 38 den Verfahrensschritt 42, welcher ein Wechseln von dem ersten Betriebsmodus in einen zweiten Betriebsmodus der drei Betriebsmodi umfasst, wobei das während des Wechsels von dem ersten Betriebsmodus in den zweiten Betriebsmodus bereitgestellte Fahrantriebsdrehmoment im Wesentlichen dem vor und nach dem Wechsel bereitgestellten Fahrantriebsdrehmoment entspricht.

Das in Fig. 1 illustrierte Motorsteuergerät 6 und das in Fig. 2 illustrierte Motorsteuergerät 206 sind dabei ausgebildet, das Verfahren 37 auszuführen. Das Motorsteuergerät 6, 206 wird bisweilen auch als Antriebseinrichtungssteuerung bezeichnet.

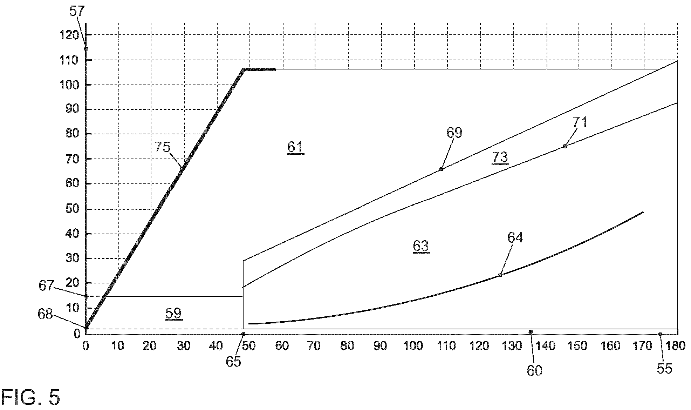

Auf der Basis der Definition von in Fig. 3 dargestellter Systemleistung und Systemdrehmoment können die verschiedenen Betriebsmodi (das heißt rein elektrischer Betrieb, serieller Hybridbetrieb und paralleler Hybridbetrieb) zum Antrieb des Hybridfahrzeuges 1, 201 in einem Diagramm von verfügbarer Antriebsleistung (und/oder Sollantriebsleistung) über Fahrzeuggeschwindigkeit (oder Antriebsraddrehzahl) visualisiert werden, wie in Fig. 5 dargestellt ist. Auf der Abszisse 55 in Fig. 5 ist die Geschwindigkeit des Hybridfahrzeuges in der Einheit km/h aufgetragen und auf der Ordinate 57 ist die (verfügbare) Antriebsleistung in der Einheit kW aufgetragen. In einem Bereich 59 und einem Bereich 60 wird der rein elektrische Betrieb (EV-Betrieb) durchgeführt, in einem Bereich 61 wird der serielle Hybridbetrieb (serieller Betrieb) durchgeführt und in einem Bereich 63 wird der parallele Hybridbetrieb (paralleler Betrieb) durchgeführt. Die Kurve 64 repräsentiert den Fahrwiderstand bei Konstantgeschwindigkeitsfahrt in der Ebene. Das in Fig. 5 dargestellte Diagramm kann analog als verfügbares Antriebsdrehmoment (anstatt von Antriebsleistung) über der Fahrzeuggeschwindigkeit oder auch der Raddrehzahl dargestellt werden.

Der rein elektrische Betrieb wird in Bereich 59 durchgeführt, falls die Fahrgeschwindigkeit unterhalb einer Fahrgeschwindigkeitsschwelle 65 liegt und die Antriebsleistung (Sollantriebsleistung) unterhalb einer Elektrischer-Betrieb-Leistungsschwelle 67 liegt.

Ferner wird der rein elektrische Betrieb in Bereich 60 durchgeführt, falls die Fahrgeschwindigkeit oberhalb der Fahrgeschwindigkeitsschwelle 65 liegt und die Antriebsleistung (Sollantriebsleistung) unterhalb einer weiteren Elektrischer-Betrieb-Leistungsschwelle 68 liegt, die kleiner ist (z. B. 3 kW) als die Elektrischer-Betrieb-Leistungsschwelle 67.

Der parallele Hybridbetrieb in dem Bereich 63 wird durchgeführt, falls sowohl die Fahrgeschwindigkeit oberhalb der Fahrgeschwindigkeitsschwelle 65 liegt, eine Sollantriebsleistung unterhalb der fahrgeschwindigkeitsabhängigen Parallelhybridbetrieb-Leistungsschwelle 69 liegt, als auch eine Sollantriebsleistung oberhalb der weiteren Elektrischer-Betrieb-Schwelle 68 liegt. Die Parallelhybridbetrieb-Leistungsschwelle 69 ist hier als die Summe der maximalen Ausgabeleistung 71 der Verbrennungskraftmaschine 5, 205 und der Boost-Unterstützung der ersten Elektromaschine 9, 209 und/oder der Boost-Unterstützung der zweiten Elektromaschine 11, 211 definiert. In dem Bereich 73 erfolgt somit im parallelen Hybridbetrieb ein Boost mittels der ersten Elektromaschine EM1 und/oder der zweiten Elektromaschine EM2.

Der serielle Hybridbetrieb wird im Bereich 61 durchgeführt, falls sowohl die Fahrgeschwindigkeit unterhalb der Fahrgeschwindigkeitsschwelle 65 liegt als auch die Sollantriebsleistung oberhalb der Elektrischer-Betrieb-Leistungsschwelle 67 liegt. Ferner wird der serielle Hybridbetrieb in dem Bereich 61 durchgeführt, falls sowohl die Fahrgeschwindigkeit oberhalb der Fahrgeschwindigkeitsschwelle 65 liegt als auch die Sollantriebsleistung oberhalb einer fahrgeschwindigkeitsabhängigen Parallelhybridbetrieb-Leistungsschwelle 69 liegt.

Der elektrische Betrieb ist bezüglich der maximalen Antriebsleistungsdarstellung zur Verbrauchsminimierung durch die Elektrischer-Betrieb-Schwelle 67 und durch die weitere Elektrischer-Betrieb-Schwelle 68 begrenzt (hier z. B.: bis ca. 49 km/h, ca. 15 kW-Antriebsleistung ab ca. 49 km/h ca. 3 kW-Antriebsleistung).

Der parallele Hybridbetrieb wird durchgeführt, sobald unter Berücksichtigung des Übersetzungsverhältnisses von Verbrennungskraftmaschine 5, 205 zum Antriebsrad 15, 215 eine minimale Drehzahl der Verbrennungskraftmaschine 5, 205 überschritten wird. In einer beispielhaften Ausführungsform ist die Overdrive-Übersetzung von der Verbrennungskraftmaschine 5, 205 zum Antriebsrad 15, 215 i = 2,8, woraus sich bei ca. 49 km/h Fahrzeuggeschwindigkeit eine Drehzahl der Verbrennungskraftmaschine 5, 205 von ca. 1200 U/min ergibt. Ab dieser Drehzahl ist die Verbrennungskraftmaschine in der Lage, selbsttätig das Antriebsdrehmoment bzw. die Antriebsleistung zu erzeugen. Der parallele Hybridbetrieb ist bezüglich der maximalen Antriebsleistungsdarstellung durch die maximale Belastung der Verbrennungskraftmaschine und unter Berücksichtigung der elektrischen Boost-Unterstützung durch den Generator EM1 und/oder den Fahrmotor EM2 durch die Systemleistung begrenzt (hier durch die Parallelhybridbetrieb-Leistungsschwelle 71 (ohne Boost) oder 69 (mit Boost)). Oberhalb der Elektrischer-Betrieb-Leistungsschwelle 67 und oberhalb der Parallelhybridbetrieb-Leistungsschwelle 69 wird der serielle Hybridbetrieb durchgeführt. Der serielle Hybridbetrieb ist bezüglich der maximalen Antriebsleistungsdarstellung durch die Dimensionierung der zweiten Elektromaschine 11, 211 (Fahrmotor EM2) durch die Linie 75 begrenzt. Die Schwellen 67, 68, 69, 71, 65 können verbrauchsoptimal bzw. CO₂-optimal bestimmt werden.

Die Herleitung einer CO₂-optimierten hybridischen Betriebsstrategie erfolgt auf Basis eines Vergleichs des konventionellen, rein verbrennungsmotorischen Antriebs mit einem intermittierenden elektrisch-verbrennungsmotorischen Fahrbetrieb. Dabei sind im Hybridbetrieb (seriell und/oder parallel) neben der Rekuperation, der Kraftstoffmehrverbrauch durch Lastpunktanhebung sowie der Energieeinsatz für das elektrische Fahren und die Motorstartvorgänge zu berücksichtigen. Das elektrische Fahren wird dann nur für einen energetisch sinnvollen Bereich zugelassen, für den der Gesamtwirkungsgrad trotz der mehrfachen, verlustbehafteten Energieumwandlung größer ist als im rein verbrennungsmotorischen Betrieb.

Der Übergang vom elektrischen Fahrbetrieb zum hybridischen Fahrbetrieb erfolgt dann, wenn die über den Pedalwert abgeleitete Fahrerwunschantriebsleistung einen vorbestimmten Wert überschreitet. Diese zusätzlich auch von der Raddrehzahl bzw. der Fahrzeuggeschwindigkeit abhängige Leistungsschwelle wird unter Anwendung eines mathematischen Optimierungsverfahrens unter Berücksichtigung aller Antriebsstrangkomponentenwirkungsgrade für verschiedene Fahrzyklen verbrauchsoptimal bestimmt.

Für das in Fig. 2 gezeigte Ausführungsbeispiel und unter Berücksichtigung typischer Komponentenwirkungsgrade kann sich bis ca. 49 km/h eine Grenzantriebsleistung von ca. 15 kW für den elektrischen Betrieb bzw. ab 50 km/h eine Grenzantriebsleistung von ca. 3 kW für den elektrischen Betrieb ergeben, ohne dass die vorliegende Erfindung auf diese Werte und Grenzen beschränkt ist.

Die drei Betriebsmodi der Antriebseinrichtung 3, 203 können dabei in verschiedenen Bereichen durchgeführt werden, welche u. a. jeweils durch die Fahrgeschwindigkeit (und/oder Antriebsraddrehzahl) und Antriebsleistung (und/oder Antriebsdrehmoment bzw. Fahrantriebsdrehmoment) definiert sind, wie es in Fig. 5 schematisch illustriert ist.

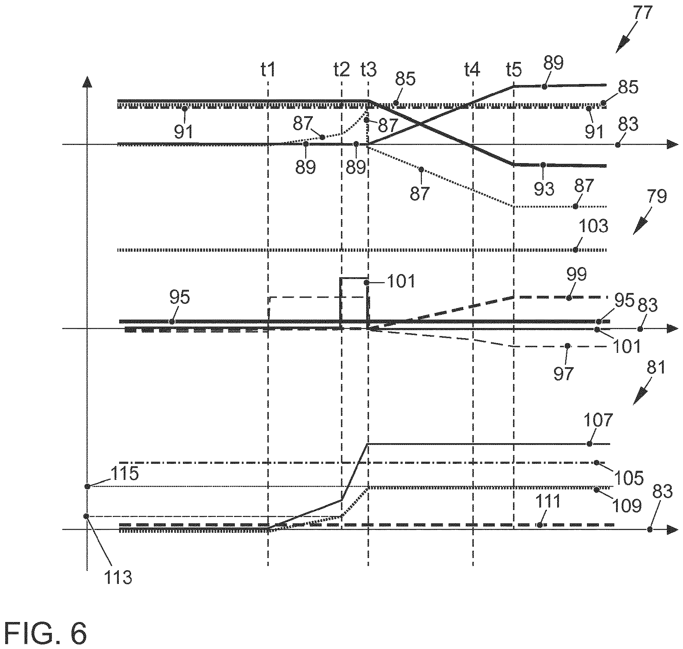

Fig. 6 illustriert in Graphen 77, 79, 81 Kurven einer Leistung (Graph 77) in der Einheit kW, eines Drehmoments (Graph 79) in der Einheit Nm und einer Drehzahl (Graph 81) in der Einheit 1/min von Komponenten der Antriebseinrichtung 3, 203, die jeweils gegen die Zeit auf Abszisse 83 aufgetragen sind, welche bei einem Betriebsartenwechsel von einem rein elektrischen Fahrbetrieb auf den seriellen Hybridbetrieb gemäß einer Ausführungsform der vorliegenden Erfindung durchgeführt werden.

In dem Graphen 77 illustriert die Kurve 85 die Leistung der zweiten Elektromaschine 11 bzw. 211, illustriert die Kurve 87 die Leistung der ersten Elektromaschine 9 bzw. 209, illustriert die Kurve 89 die (Fahr-)Leistung der Verbrennungskraftmaschine 5 bzw. 205, illustriert die Kurve 91 die Leistung an dem Antriebsrad 15 bzw. 215 und illustriert die Kurve 93 die Leistung des Akkumulators (und/oder HV-Batterie) 13 bzw. 213. Von den jeweiligen Komponenten abgegebene Leistung ist dabei positiv und aufgenommene Leistung ist negativ.

In dem Graphen 79 illustriert die Kurve 95 das Drehmoment der zweiten Elektromaschine 11, 211, illustriert die Kurve 97 das Drehmoment der ersten Elektromaschine 9, 209, illustriert die Kurve 99 das Fahrdrehmoment der Verbrennungskraftmaschine 3, 203, illustriert die Kurve 101 das Startdrehmoment der Verbrennungskraftmaschine und illustriert die Kurve 103 das an dem Antriebsrad 15, 215 anliegende Drehmoment.

In dem Graphen 81 illustriert die Kurve 105 die Drehzahl der zweiten Elektromaschine 11 bzw. 211, illustriert die Kurve 107 die Drehzahl der ersten Elektromaschine 9, 209, illustriert die Kurve 109 die Drehzahl der Verbrennungskraftmaschine 5, 205 und illustriert die Kurve 111 die Drehzahl des Antriebsrads 15 bzw. 215.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu einem ersten Zeitpunkt (t1) liegt der rein elektrische Fahrmodus (elektr. Fahren) vor, der über eine Leistungsentnahme aus dem Akkumulator (und/oder HV-Batterie) 13 bzw. 213 dargestellt wird. Bis zu diesem ersten Zeitpunkt t1 wird somit das Fahrzeug 1 bzw. 201 ausschließlich durch die zweite Elektromaschine 11 bzw. 211 angetrieben.

In dem in den Graphen 77, 79, 81 gezeigten Fall handelt es sich um einen Fahrbetrieb mit konstanter Fahrgeschwindigkeit, das heißt Raddrehzahl und Raddrehmoment (sowie in Folge dessen auch die Antriebsleistung) sind konstant. Die Hauptkupplung K0 (auch mit Bezugszeichen 17 bzw. 217 in Fig. 1 und 2 bezeichnet) ist dabei stets geöffnet. Die Einheit aus der Verbrennungskraftmaschine 5 bzw. 205 und der ersten Elektromaschine (Generator) 9 bzw. 209 steht zur Vermeidung von Schleppverlusten während des elektrischen Fahrens still. Somit ist also die Drehzahl der Verbrennungskraftmaschine 5 bzw. 205 und auch die Drehzahl der ersten Elektromaschine 9 bzw. 209 bis zum ersten Zeitpunkt t1 gleich Null.

Der Startablauf (VM-Zustart) beginnt zum Zeitpunkt t1 von einem vom Hybridkoordinator gegebenen Startkommando. Die Steuerung der ersten Elektromaschine 9 bzw. 209 stellt ein Drehmoment an der ersten Elektromaschine 9 bzw. 209 ein und hebt damit die Drehzahl der Einheit aus der Verbrennungskraftmaschine 5 bzw. 205 und der ersten Elektromaschine 9 bzw. 209 an, bis zu einem zweiten Zeitpunkt t2 eine Drehzahl der Verbrennungskraftmaschine 5 bzw. 205 von ca. 200 U/min eingestellt ist. Andere Werte sind möglich. Die Drehzahl der Verbrennungskraftmaschine 5 bzw. 205 wird so bis zum zweiten Zeitpunkt t2 auf eine Drehzahl gebracht, welche einer Startdrehzahlschwelle 113 entspricht und/oder gleicht. Falls die Drehzahl der Verbrennungskraftmaschine 5 bzw. 205 die Startdrehzahlschwelle 113 erreicht oder übersteigt, kann die Verbrennungskraftmaschine 5 bzw. 205 darüber hinaus selbst über die eigene Kraftstoffeinspritzung und der damit einhergehenden Darstellung eines Startmoments zur weiteren Drehzahlanhebung der Einheit aus Verteilungskraftmaschine 5 bzw. 205 und erster Elektromaschine 9 bzw. 209 beitragen. Das effektive Verbrennungskraftmaschine-Drehmoment an der Kurbelwelle zum Antrieb des Hybridfahrzeuges bleibt dabei Null.

In einer alternativen Ausführungsform kann auch zwischen dem zweiten Zeitpunkt t2 und dem dritten Zeitpunkt t3 das Drehmoment der ersten Elektromaschine 9 bzw. 209 reduziert werden oder völlig auf Null gesetzt werden und so die Drehzahlanhebung der Einheit aus Verbrennungskraftmaschine 5 bzw. 205 und erster Elektromaschine 9 bzw. 209 ausschließlich über die Kraftstoffeinspritzung der Verbrennungskraftmaschine umgesetzt werden.

Zu einem dritten Zeitpunkt t3 hat die Verbrennungskraftmaschine 5 bzw. 205 eine Zieldrehzahl 115 für den seriellen Betrieb erreicht. In Folge dessen kann das Drehmoment der ersten Elektromaschine 9 bzw. 209 sowie das Startmoment des Verbrennungsmotors bzw. der Verbrennungskraftmaschine 5 bzw. 205 zur Drehzahlanhebung der Einheit aus Verbrennungskraftmaschine 5 bzw. 205 und erster Elektromaschine 9 bzw. 209 zurückgenommen werden.

Ab dem dritten Zeitpunkt t3 findet eine Leistungsüberblendung statt, die die geforderte Antriebsleistung von dem Akkumulator 13 bzw. 213 (und/oder HV-Batterie) auf die Verbrennungskraftmaschine 5 bzw. 205 überführt. Die Verbrennungskraftmaschine 5 bzw. 205 baut dabei effektives Drehmoment (sowie in Folge dessen verbrennungsmotorische Leistung) auf. Die verbrennungsmotorische Leistung wird über einen entsprechenden Drehmomentaufbau an der ersten Elektromaschine 9 bzw. 209 in elektrische Energie gewandelt, die unmittelbar auf die zweite Elektromaschine (Traktionsmaschine) 11 bzw. 211 zur Darstellung und/oder Erzeugung der Radantriebsleistung bzw. zur Darstellung der geforderten Fahrantriebsleistung übertragen wird. Entsprechend kann die Leistungsentnahme aus der HV-Batterie 13 bzw. 213 zur Darstellung der geforderten Antriebsleistung sukzessive auf Null reduziert werden, bis zu einem vierten Zeitpunkt t4 die geforderte Antriebsleistung ausschließlich durch die Verbrennungskraftmaschine 5 bzw. 205 bereitgestellt wird. Der Betriebsartenwechsel von dem rein elektrischen Betrieb auf den seriellen Hybridbetrieb kann zu einem vierten Zeitpunkt t4 abgeschlossen sein. Ab dem vierten Zeitpunkt t4 liegt daher der Betriebsmodus serieller Hybridbetrieb vor.

In dem in Fig. 6 illustrierten Ausführungsbeispiel wird der Drehmomentaufbau an der Verbrennungskraftmaschine 5 bzw. 205 sowie der entsprechende Drehmomentaufbau an der ersten Elektromaschine 9 bzw. 209 ab dem vierten Zeitpunkt t4 bis zu einem fünften Zeitpunkt t5 fortgesetzt. Der damit einhergehende und über die geforderte Antriebsleistung hinausgehende Leistungsaufbau an der Verbrennungskraftmaschine 5 bzw. 205 wird über die erste Elektromaschine 9 bzw. 209 in den Akkumulator 13 bzw. 213 zur Darstellung einer Lastpunktanhebung (Nachladung des Akkumulators 13 bzw. 213) überführt (serieller Hybridantrieb mit Lastpunktanhebung ab t5).

Während des gesamten Vorgangs bleibt die Hauptkupplung K0, auch als Trennkupplung bezeichnet, stets geöffnet. Weiterhin bleiben die Antriebsraddrehzahl und das Antriebsradmoment (sowie in Folge dessen auch die Antriebsradleistung) während des gesamten Vorgangs konstant, so dass der Betriebsartenwechsel von dem rein elektrischen Betrieb in den seriellen Hybridbetrieb ohne Zugkraftunterbrechung durchgeführt werden kann. Der gesamte Vorgang kann eine Zeitdauer von ca. 0,2 bis 0,5 Sekunden (Zeitdauer von dem ersten Zeitpunkt t1 bis zum fünften Zeitpunkt t5) andauern und/oder 0,5 Sekunden nicht überschreiten und kann daher sehr schnell umgesetzt werden.

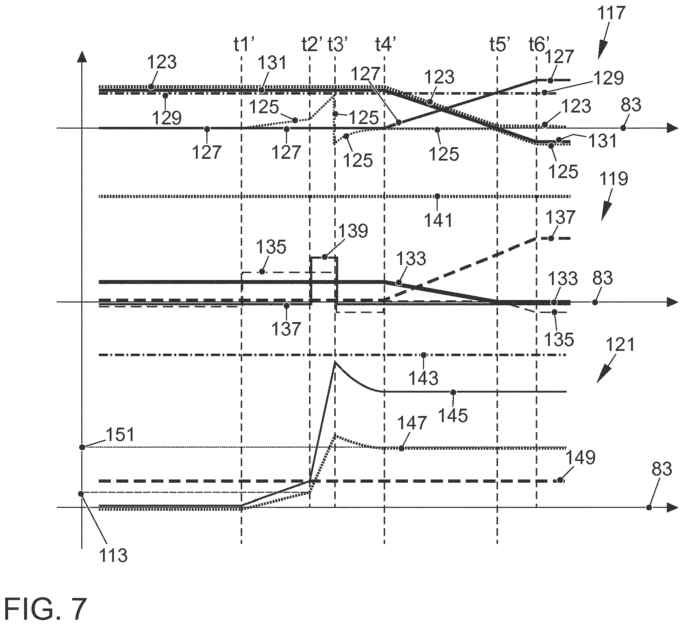

**Fig. 7** illustriert Graphen 117, 119, 121, welche Leistung in der Einheit kW, Drehmoment in der Einheit Nm und Drehzahl in der Einheit 1/min gegen die Zeit (Abszisse 83) während eines Betriebsartenwechsels von einem rein elektrischen Fahren zu einem parallelen Hybridbetrieb gemäß einer Ausführungsform der vorliegenden Erfindung illustrieren.

In dem Graphen 117 illustriert eine Kurve 123 die Leistung der zweiten Elektromaschine 11 bzw. 211, illustriert eine Kurve 125 die Leistung der ersten Elektromaschine 9 bzw. 209, illustriert eine Kurve 127 die (Fahr-)Leistung der Verbrennungskraftmaschine 5 bzw. 205, illustriert eine Kurve 129 die Leistung an dem Antriebsrad 15 bzw. 215 und illustriert eine Kurve 131 die Leistung des Akkumulators 13 bzw. 213.

In dem Graphen 119 illustriert eine Kurve 133 das Drehmoment der zweiten Elektromaschine 11 bzw. 211, illustriert eine Kurve 135 das Drehmoment der ersten Elektromaschine 9 bzw. 209, illustriert eine Kurve 137 ein Fahrdrehmoment der Verbrennungskraftmaschine 5 bzw. 205, illustriert eine Kurve 139 ein Startmoment der Verbrennungskraftmaschine 5, 205 und illustriert eine Kurve 141 ein Antriebsdrehmoment des Antriebsrads 15 bzw. 215.

In dem Graphen 121 illustriert eine Kurve 143 die Drehzahl der zweiten Elektromaschine 11 bzw. 211, illustriert eine Kurve 145 eine Drehzahl der ersten Elektromaschine 9 bzw. 209, illustriert eine Kurve 147 eine Drehzahl der Verbrennungskraftmaschine 9 bzw. 209 und illustriert eine Kurve 149 eine Drehzahl des Antriebsrads 15 bzw. 215.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu einem weiteren ersten Zeitpunkt t1' liegt der rein elektrische Betrieb (elektr. Fahren) vor, der über eine Leistungsentnahme aus dem Akkumulator 13 bzw. 213 dargestellt wird. In dem gezeigten Fall handelt es sich um eine Fahrbetrieb mit konstanter Fahrgeschwindigkeit, das heißt Antriebsraddrehzahl und Antriebsradmoment (sowie im Folge dessen auch die Antriebsradleistung) sind konstant. Die Hauptkupplung K0, auch als Trennkupplung bezeichnet, ist bis zu einem weiteren vierten Zeitpunkt t4' geöffnet, ab dem weiteren vierten Zeitpunkt t4' geschlossen. Die Einheit aus Verbrennungskraftmaschine und erster Elektromaschine 9 bzw. 209 steht zur Vermeidung von Schleppverlusten während des rein elektrischen Betriebs still. Somit sind also die Drehzahl der Verbrennungskraftmaschine 5 bzw. 205 sowie auch die Drehzahl der ersten Elektromaschine 9 bzw. 209 gleich Null.

Der Startablauf (VM-Zustart) beginnt zu einem weiteren Zeitpunkt t1' mit einem vom Hybridkoordinator gegebenen Startkommando. Die Steuerung der ersten Elektromaschine 9 bzw. 209 stellt ein Drehmoment an der ersten Elektromaschine 9 bzw. 209 ein und hebt damit die Drehzahlen der Einheit aus Verbrennungskraftmaschine 5 bzw. 205 und der ersten Elektromaschine 9 bzw. 209 an, bis bei einem weiteren zweiten Zeitpunkt t2' die Drehzahl der Verbrennungskraftmaschine 5, 205 eine Startdrehzahlschwelle 113 erreicht ist. Die Startdrehzahlschwelle 113 kann z. B. ca. 200 U/min betragen. Andere Werte sind möglich. Ab einer solchen Startdrehzahlschwelle kann die Verbrennungskraftmaschine 5, 205 selbst über eine eigene Kraftstoffeinspritzung und der damit einhergehenden Darstellung eines Startmoments zur weiteren Drehzahlanhebung der Einheit aus Verbrennungskraftmaschine 5 bzw. 205 und erster Elektromaschine 9 bzw. 209 beitragen. Das effektive Verbrennungskraftmaschine-Drehmoment an der Kurbelwelle zum Antrieb des Hybridfahrzeuges bleibt dabei Null.

In einer anderen Ausführungsform ist es möglich, zwischen dem weiteren zweiten Zeitpunkt t2' und dem weiteren dritten Zeitpunkt t3' das Drehmoment der ersten Elektromaschine 9 bzw. 209 zu reduzieren oder völlig auf Null zu setzen und so die Drehzahlanhebung der Einheit aus Verbrennungskraftmaschine 5 bzw. 205 und erster Elektromaschine 9 bzw. 209 ausschließlich über die Kraftstoffeinspritzung der Verbrennungskraftmaschine 5 bzw. 205 umzusetzen.

Zu einem weiteren dritten Zeitpunkt t3' erreicht die Verbrennungskraftmaschine 5 bzw. 205 eine Drehzahl, die typischerweise etwas höher als eine Zieldrehzahl 151 für den parallelen Hybridbetrieb ist. In Folge dessen kann das Drehmoment der ersten Elektromaschine 9 bzw. 209 sowie das Startmoment der Verbrennungskraftmaschine 5 bzw. 205 zur Drehzahlanhebung der Einheit aus Verbrennungskraftmaschine 5 bzw. 205 und erster Elektromaschine 9 bzw. 209 zurückgenommen werden. Zudem schließt sich bis zu einem weiteren vierten Zeitpunkt t4' ein generatorischer Betrieb der ersten Elektromaschine 9 bzw. 209 an, der die Drehzahl der Verbrennungskraftmaschine 5 bzw. 205 in die Zieldrehzahl für den parallelen Hybridbetrieb 151 überführt.

Zu dem weiteren vierten Zeitpunkt t4' wird die Hauptkupplung K0 geschlossen. Im Anschluss an das Schließen der Hauptkupplung K0 findet eine Leistungsüberblendung (Momentenüberblendung) statt, die die geforderte Antriebsleistung von dem Akkumulator 13 bzw. 213 auf die Verbrennungskraftmaschine 5 bzw. 205 überführt. Der Verbrennungsmotor bzw. die Verbrennungskraftmaschine 5 bzw. 205 baut dabei effektives Drehmoment (sowie in Folge dessen auch verbrennungsmotorische Leistung) auf, das unmittelbar über die Hauptkupplung K0 zur Darstellung des Antriebsradmoments (bzw. zur Darstellung der geforderten Antriebsradleistung) mechanisch an das Antriebsrad 15 bzw. 215 übertragen wird. Entsprechend kann die Leistungsentnahme aus dem Akkumulator 13 bzw. 213 zur Darstellung der geforderten Antriebsleistung sukzessive auf Null reduziert werden, bis zu einem weiteren Zeitpunkt t5` die geforderte Antriebsleistung ausschließlich durch die Verbrennungskraftmaschine 5 bzw. 205 bereitgestellt wird. Der Betriebsartenwechsel von dem rein elektrischen Betrieb auf den parallelen Hybridbetrieb ist dabei zum weiteren fünften Zeitpunkt t5' abgeschlossen. Ab dem weiteren fünften Zeitpunkt t5' liegt daher der Betriebsmodus paralleler Hybridbetrieb vor.

In dem in Fig. 7 illustrierten Ausführungsbeispiel wird der Drehmomentaufbau am Verbrennungsmotor bzw. an der Verbrennungskraftmaschine 5 bzw. 205 (einhergehend mit einem entsprechenden Drehmomentaufbau an der ersten Elektromaschine 9 bzw. 209) ab dem weiteren fünften Zeitpunkt t5' bis zum weiteren Zeitpunkt t6' fortgesetzt. Der damit resultierende über die geforderte Antriebsleistung hinausgehende Leistungsaufbau an der Verbrennungskraftmaschine wird über die erste Elektromaschine 9 bzw. 209 in den Akkumulator 13 bzw. 213 zur Darstellung einer Lastpunktanhebung (Nachladung des Akkumulators 13 bzw. 213) überführt (paralleler Hybridbetrieb mit Lastpunktanhebung ab t5').

Während des gesamten Vorgangs bleiben Antriebsraddrehzahl und Antriebsraddrehmoment (sowie in Folge dessen auch die Antriebsradleistung) konstant, so dass der Betriebsartenwechsel von dem rein elektrischen Betrieb auf den parallelen Hybridantrieb ohne Zugkraftunterbrechung durchgeführt werden kann. Der gesamte Vorgang wird in der Regel eine Zeitdauer von ca. 0,2 bis 0,5 Sekunden (Zeitdauer von dem weiteren ersten Zeitpunkt t1' bis zu dem weiteren sechsten Zeitpunkt t6') nicht überschreiten und kann daher sehr schnell umgesetzt werden.

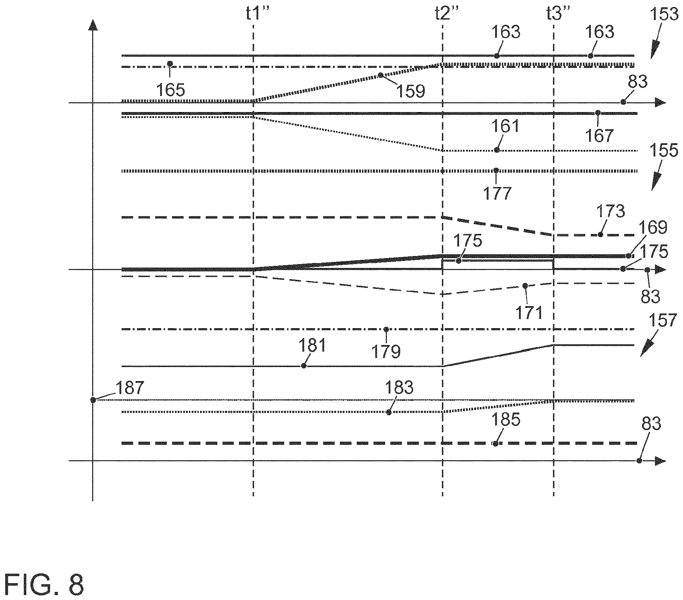

**Fig. 8** illustriert Graphen 153, 155, 157, wobei eine Leistung in der Einheit kW, ein Drehmoment in der Einheit Nm und eine Drehzahl in der Einheit 1/min gegen die Zeit (Abszisse 83) während eines Betriebsartenwechsels von einem parallelen Hybridbetrieb zu einem seriellen Hybridbetrieb gemäß einer Ausführungsform der vorliegenden Erfindung dargestellt sind.

Dabei illustriert eine Kurve 159 in dem Graphen 153 eine Leistung der zweiten Elektromaschine 11 bzw. 211, illustriert eine Kurve 161 eine Leistung der ersten Elektromaschine 9 bzw. 209, illustriert eine Kurve 163 eine (Fahr-)Leistung der Verbrennungskraftmaschine 5 bzw. 205, illustriert eine Kurve 165 eine Antriebsleistung an dem Antriebsrad 15 bzw. 215 und illustriert eine Kurve 167 eine Leistung des Akkumulators 13 bzw. 213.

In dem Graphen 155 illustriert eine Kurve 169 ein Drehmoment der zweiten Elektromaschine 11 bzw. 211, illustriert eine Kurve 171 ein Drehmoment der ersten Elektromaschine 9 bzw. 209, illustriert eine Kurve 173 ein Fahrdrehmoment der Verbrennungskraftmaschine 5 bzw. 205, illustriert eine Kurve 175 ein Moment zur Drehzahlanhebung der Verbrennungskraftmaschine 5 bzw. 205 und illustriert eine Kurve 177 ein Antriebsdrehmoment an dem Antriebsrad 15 bzw. 215.

In dem Graphen 157 illustriert eine Kurve 179 eine Drehzahl der zweiten Elektromaschine 11 bzw. 211, illustriert eine Kurve 181 eine Drehzahl der ersten Elektromaschine 9 bzw. 209, illustriert eine Kurve 183 eine Drehzahl der Verbrennungskraftmaschine 5 bzw. 205 und illustriert eine Kurve 185 eine Drehzahl des Antriebsrads 15 bzw. 215.

Zeitweise deckungsgleiche (d. h. übereinander liegende) Kurven sind zur besseren Lesbarkeit (teilweise) mit geringfügigen Abständen zueinander bzgl. der Abszissen aufgetragen.

Bis zu einem noch weiteren Zeitpunkt t1" liegt der Betriebsmodus paralleler Hybridbetrieb (mit Lastpunktanhebung in dem in Fig. 8 illustrierten Ausführungsbeispiel) vor, der über die Verbrennungskraftmaschine dargestellt wird. In dem in Fig. 8 illustrierten Ausführungsbeispiel handelt es sich um einen Fahrbetrieb mit konstanter Fahrgeschwindigkeit, das heißt Antriebsraddrehzahl und Antriebsraddrehmoment (sowie in Folge dessen auch die Antriebsradleistung) sind konstant. Die Hauptkupplung K0, auch als Trennkupplung bezeichnet, ist bis zu einem noch weiteren zweiten Zeitpunkt t2" geschlossen, ab dem noch weiteren zweiten Zeitpunkt t2" geöffnet. Die Einheit aus der Verbrennungskraftmaschine 5, 205 und erster Elektromaschine 9 bzw. 209 sind bezüglich ihrer Drehzahlen gemäß des parallelen Übersetzungsverhältnisses Verbrennungskraftmaschine 5, 205 zu Antriebsrad (bzw. erster Elektromaschine 9 bzw. 209 zu Antriebsrad 15 bzw. 215) mechanisch fest an das Antriebsrad 15 bzw. 215 gekoppelt. Die geforderte Antriebsleistung (sowie die zusätzliche Nachladeleistung für den Akkumulator 13 bzw. 213) werden durch die Verbrennungskraftmaschine 5, 205 bereitgestellt. Die erste Elektromaschine 9 bzw. 209 stellt dabei ein generatorisches Drehmoment zur Umsetzung der Lastpunktanhebung (Nachladung des Akkumulators 13 bzw. 213) bereit.

Der Betriebsartenwechsel von dem parallelen Hybridbetrieb zu dem seriellen Hybridbetrieb beginnt zu einem noch weiteren ersten Zeitpunkt t1" mit einem vom Hybridkoordinator gegebenen Kommando zum Betriebsartenwechsel. Dazu wird bis zu einem noch weiteren zweiten Zeitpunkt t2" zunächst der parallele Hybridbetrieb auf einen seriellen Hybridbetrieb umgelagert (leistungsverzweigter Hybridbetrieb). Die Steuerung der ersten Elektromaschine 9 bzw. 209 baut dabei kontinuierlich zusätzliches generatorisches Drehmoment auf. Entsprechend dem zusätzlichen Drehmomentaufbau an der ersten Elektromaschine 9 bzw. 209 kann dann kontinuierlich verbrennungsmotorische Leistung in elektrische Leistung gewandelt werden, die (unter Beibehaltung der optionalen Nachladung des Akkumulators 13 bzw. 213) unmittelbar auf den Fahrmotor zur Darstellung der Radleistung bzw. zur Darstellung der geforderten Antriebsleistung übertragen wird. In Folge dessen kann die mechanische Leistungsübertragung über die Hauptkupplung K0 zur Darstellung der geforderten Antriebsleistung sukzessive auf Null reduziert werden, bis zu dem noch weiteren zweiten Zeitpunkt t2" die geforderte Antriebsleistung ausschließlich über einen seriellen Hybridbetrieb (mit Lastpunktanhebung) bereitgestellt wird. In anderen Ausführungsformen kann der Betriebsartenwechsel ohne die optional mögliche Lastpunktanhebung durchgeführt werden.

Zu dem noch weiteren zweiten Zeitpunkt t2" ist die Hauptkupplung K0 vollständig lastfrei und kann daher geöffnet werden. Nach dem Öffnen der Hauptkupplung K0 wird die Drehzahl der Verbrennungskraftmaschine 5 bzw. 205 in die Zieldrehzahl 187 für den seriellen Hybridbetrieb überführt (Betriebspunkteinstellung VM). Dazu stellt in dem in Fig. 8 illustrierten Ausführungsbeispiel die Verbrennungskraftmaschine 5, 205 über die eigene Kraftstoffeinspritzung zusätzliches Drehmoment zur Darstellung einer Drehzahlanhebung der Einheit aus Verbrennungskraftmaschine 5 bzw. 205 und erster Elektromaschine 9 bzw. 209 bereit. Zu einem noch weiteren dritten Zeitpunkt t3" hat sich die Zieldrehzahl der Verbrennungskraftmaschine für den seriellen Hybridbetrieb mit entsprechend geänderten Drehmomenten von Verbrennungskraftmaschine 5 bzw. 205 und erster Elektromaschine 9 bzw. 209 eingestellt. Das erforderliche Verbrennungskraftmaschine-Drehmoment zur Drehzahlanhebung kann wieder zurückgenommen werden. Der Betriebsartenwechsel von einem parallelen Hybridantrieb auf einen seriellen Hybridantrieb ist zu dem noch weiteren dritten Zeitpunkt t3" abgeschlossen. Ab dem noch weiteren dritten Zeitpunkt t3" liegt daher der Betriebsmodus serieller Hybridbetrieb (mit Lastpunktanhebung) vor.

Während des gesamten Vorgangs des Betriebsartenwechsel von dem parallelen Hybridbetrieb zu dem seriellen Hybridbetrieb bleiben Antriebsraddrehzahl und Antriebsraddrehmoment (sowie in Folge dessen auch die Antriebsradleistung) konstant, so dass der Betriebsartenwechsel von dem parallelen Hybridbetrieb zu dem seriellen Hybridbetrieb ohne eine Zugkraftunterbrechung durchgeführt werden kann. Der gesamte Vorgang wird in der Regel eine Zeitdauer von ca. 0,2 bis 0,5 Sekunden (Zeitdauer von dem noch weiteren ersten Zeitpunkt t1" bis zu dem noch weiteren dritten Zeitpunkt t3") nicht überschreiten und kann daher sehr schnell umgesetzt werden.

Die in Fig. 6 und/oder 7 und/oder 8 illustrierten Schritte zum Durchführen eines Wechsels von einem ersten Betriebsmodus zu einem zweiten Betriebsmodus können in dem in Fig. 1 oder 2 illustrierten Hybridfahrzeugen (z. B. in irgendeiner Ordnung nacheinander) durchgeführt werden.

Die vorliegende Technologie kann eine der folgenden Ausgestaltungen aufweisen:
(1) Verfahren zum Betreiben einer Antriebseinrichtung eines Hybridfahrzeuges zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst, wobei das Verfahren aufweist:
   Betreiben der Antriebseinrichtung in einem ersten Betriebsmodus der folgenden drei Betriebsmodi:
      einem rein elektrischen Betrieb, in dem ein auf das Antriebsrad wirkendes Fahrantriebsdrehmoment mittels der zweiten Elektromaschine bewirkt wird, während die Verbrennungskraftmaschine ausgeschaltet ist;
      einem seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken;
      einem parallelen Hybridbetrieb, in dem das Fahrantriebsdrehmoment mittels der Verbrennungskraftmaschine bewirkt wird; und
   zumindest einmal Wechseln von dem ersten Betriebsmodus in einen zweiten
   Betriebsmodus der drei Betriebsmodi,
   wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.
(2) Verfahren gemäß (1), wobei der erste Betriebsmodus der rein elektrische Betrieb ist und der zweite Betriebsmodi der serielle Hybridbetrieb ist, wobei das Wechseln aufweist:
   bis zu einem ersten Zeitpunkt Betreiben der zweiten Elektromaschine im elektromotorischen Betrieb mit elektrischer Energie aus dem Akkumulator;
   ab dem ersten Zeitpunkt und zumindest bis zu einem zweiten Zeitpunkt, ab dem eine Drehzahl der Verbrennungskraftmaschine eine Startdrehzahlschwelle erreicht oder
   übersteigt, Betreiben der ersten Elektromaschine im elektromotorischen Betrieb zum Erzeugen eines Drehmoments, um eine Drehzahl der Verbrennungskraftmaschine zu erhöhen;
   ab dem zweiten Zeitpunkt Zuführen von Kraftstoff an die Verbrennungskraftmaschine;
   ab einem dritten Zeitpunkt, bei dem die Drehzahl der Verbrennungskraftmaschine eine Zieldrehzahl für den seriellen Betrieb erreicht oder übersteigt, Betreiben der ersten Elektromaschine im generatorischen Betrieb zum Erzeugen von elektrischer Energie;
   zwischen dem dritten Zeitpunkt und einem vierten Zeitpunkt Betreiben der zweiten Elektromaschine im elektromotorischen Betrieb durch zeitlich abnehmende Zuführung von elektrischer Energie aus dem Akkumulator und zeitlich zunehmende Zuführung von mittels der Verbrennungskraftmaschine über die erste Elektromaschine erzeugter elektrischer Energie; und
   ab dem vierten Zeitpunkt Betreiben der zweiten Elektromaschine im elektromotorischen Betrieb mit elektrischer Energie, die über die erste Elektromaschine mittels der Verbrennungskraftmaschine erzeugt wird.
(3) Verfahren gemäß (2), wobei das Verfahren ferner aufweist:
   zwischen dem vierten Zeitpunkt und einem fünften Zeitpunkt Erhöhen der Leistungsabgabe der Verbrennungskraftmaschine auf eine Sollleistung, die um eine Lastpunkterhöhungsleistung oberhalb einer Sollantriebsleistung liegt, und ab dem fünften Zeitpunkt Laden des Akkumulators mit einer der Lastpunkterhöhungsleistung entsprechenden Ladeleistung.
(4) Verfahren gemäß einem aus (1) bis (3), wobei der erste Betriebsmodus der rein elektrische Betrieb ist und der zweite Betriebsmodus der parallele Hybridbetrieb ist, wobei das Wechseln aufweist:
   bis zu einem weiteren vierten Zeitpunkt Offenhalten der Hauptkupplung;
   bis zu einem weiteren ersten Zeitpunkt Betreiben der zweiten Elektromaschine im elektromotorischen Betrieb mit elektrischer Energie aus dem Akkumulator;
   ab dem weiteren ersten Zeitpunkt und zumindest bis zu einem weiteren zweiten Zeitpunkt, ab dem eine Drehzahl der Verbrennungskraftmaschine eine Startdrehzahlschwelle erreicht oder übersteigt, Betreiben der ersten Elektromaschine im elektromotorischen Betrieb zum Erzeugen eines Drehmoments, um eine Drehzahl der Verbrennungskraftmaschine zu erhöhen;
   ab dem weiteren zweiten Zeitpunkt Zuführen von Kraftstoff an die Verbrennungskraftmaschine;
   ab einem weiteren dritten Zeitpunkt, bei dem die Drehzahl der Verbrennungskraftmaschine eine Zieldrehzahl für den parallelen Hybridbetrieb erreicht oder übersteigt, Betreiben der ersten Elektromaschine im generatorischen Betrieb;
   bis zu dem weiteren vierten Zeitpunkt Betreiben der ersten Elektromaschine im generatorischen Betrieb, um die Drehzahl der Verbrennungskraftmaschine auf die Zieldrehzahl für den parallelen Hybridbetrieb zu bringen, falls zum weiteren dritten Zeitpunkt die Drehzahl der Verbrennungskraftmaschine die Zieldrehzahl für den parallelen Hybridbetrieb übersteigt;
   bei dem weiteren vierten Zeitpunkt Schließen der Hauptkupplung;
   ab dem weiteren vierten Zeitpunkt Betreiben der Verbrennungskraftmaschine mit der Zieldrehzahl für den parallelen Hybridbetrieb;
   zwischen dem weiteren vierten Zeitpunkt und einem weiteren fünften Zeitpunkt Erzeugen des Fahrantriebsdrehmoments zeitlich zunehmend durch von der
   Verbrennungskraftmaschine erzeugtem Drehmoment und zeitlich abnehmend durch von der zweiten Elektromaschine erzeugtem Drehmoment;
   ab dem weiteren fünften Zeitpunkt Erzeugen des Fahrantriebsdrehmoments ausschließlich mittels der Verbrennungskraftmaschine.
(5) Verfahren gemäß (4), wobei das Verfahren ferner aufweist:
   Ab dem weiteren fünften Zeitpunkt Erhöhen der Leistung der Verbrennungskraftmaschine um eine Lastpunkterhöhungsleistung über eine Sollantriebsleistung hinaus und Laden des Akkumulators mit einer der Lastpunkterhöhungsleistung entsprechenden Ladeleistung.
(6) Verfahren gemäß einem aus (1) bis (5), wobei der erste Betriebsmodus der parallele Hybridbetrieb ist und der zweite Betriebsmodi der serielle Hybridbetrieb ist, wobei das Wechseln aufweist:
   bis zu einem noch weiteren ersten Zeitpunkt bei geschlossener Hauptkupplung Erzeugen des Fahrantriebsdrehmoments mittels der Verbrennungskraftmaschine, während die zweite Elektromaschine ausgeschaltet ist;
   ab dem noch weiteren ersten Zeitpunkt bis zu einem noch weiteren zweiten Zeitpunkt Betreiben der ersten Elektromaschine im generatorischen Betrieb, um eine zeitlich zunehmende elektrische Energie zu erzeugen;
   Verwenden der zeitlich zunehmenden elektrischen Energie, um mittels der zweiten Elektromaschine ein zeitlich zunehmendes Drehmoment auf das Antriebsrad zu übertragen;
   bei dem noch weiteren zweiten Zeitpunkt Öffnen der Hauptkupplung;
   ab dem noch weiteren zweiten Zeitpunkt Erzeugen des Fahrantriebsdrehmoments ausschließlich mittels der zweiten Elektromaschine.
(7) Verfahren gemäß (6), wobei das Verfahren ferner aufweist:
   zwischen dem noch weiteren zweiten Zeitpunkt und einem noch weiteren dritten Zeitpunkt Verändern der Drehzahl der Verbrennungskraftmaschine, um eine Zieldrehzahl für den seriellen Betrieb zu erreichen.
(8) Verfahren gemäß einem aus (1) bis (7),
   wobei die Antriebseinrichtung eine Hauptkupplung umfasst, die zwischen der Verbrennungskraftmaschine und dem Antriebsrad angeordnet ist, wobei die Hauptkupplung im rein elektrischen Betrieb und/oder im seriellen Hybridbetrieb geöffnet wird, und/oder
   wobei die Antriebseinrichtung eine erste Kupplung umfasst, die zwischen der ersten Elektromaschine und der Verbrennungskraftmaschine angeordnet ist, wobei die erste Kupplung im rein elektrischen Betrieb geöffnet wird und/oder im parallelen Hybridbetrieb geöffnet werden kann, und/oder
   wobei die Antriebseinrichtung eine zweite Kupplung umfasst, die zwischen der zweiten Elektromaschine und dem Antriebsrad angeordnet ist, wobei die zweite Kupplung im parallelen Hybridbetrieb geöffnet wird.
(9) Verfahren gemäß einem aus (2), (3), (6) oder (7), wobei der Wechsel in den seriellen Hybridbetrieb nur durchgeführt wird,
   falls sowohl die Fahrgeschwindigkeit unterhalb einer Fahrgeschwindigkeitsschwelle liegt als auch eine Sollantriebsleistung und/oder ein Sollantriebsdrehmoment oberhalb einer Elektrischer-Betrieb-Schwelle liegt,
   oder falls sowohl die Fahrgeschwindigkeit oberhalb einer Fahrgeschwindigkeitsschwelle liegt als auch eine Sollantriebsleistung und/oder ein Sollantriebsdrehmoment oberhalb einer Parallelhybridbetrieb-Schwelle liegt,
   wobei bei Betreiben der Antriebseinrichtung im seriellen Hybridbetrieb die Verbrennungskraftmaschine an einem Arbeitspunkt basierend auf einem kombinierten Wirkungsgrad, welcher von dem Wirkungsgrad der Verbrennungskraftmaschine und von dem Wirkungsgrad der ersten Elektromaschine abhängt, betrieben wird.
(10) Hybridfahrzeug, aufweisend:
   eine Antriebseinrichtung zum Antreiben eines Antriebsrads des Hybridfahrzeuges, wobei die Antriebseinrichtung eine Verbrennungskraftmaschine, eine mit der Verbrennungskraftmaschine gekoppelte erste Elektromaschine, eine zweite Elektromaschine,
      einen elektrischen Akkumulator und eine Hauptkupplung zwischen der Verbrennungskraftmaschine und dem Antriebsrad umfasst; und
   eine Antriebseinrichtungssteuerung, welche ausgebildet ist, ein Verfahren gemäß einem aus (1) bis (9) auszuführen oder zu steuern.

### Bezugszeichenliste

- 1: Hybridfahrzeug
- 3: Antriebseinrichtung
- 5: Verbrennungskraftmaschine
- 6: Antriebseinrichtungssteuerung
- 7: Zylinder
- 8: Steuersignal
- 9: erste Elektromaschine
- 10: Steuersignal
- 11: zweite Elektromaschine
- 12: Steuersignal
- 13: Akkumulator
- 14: Steuersignal
- 15: Antriebsrad
- 17: Hauptkupplung K0
- 19: Getriebe
- 21: Radantriebstrang
- 23: Differenzialübersetzung
- 25: Differenzial
- 27: erste Kupplung K1
- 29: Übersetzungselement
- 31: Ausgangswelle Verbrennungskraftmaschine
- 32: Eingangswelle Getriebe
- 33: Ausgangswelle Getriebe
- 35: Übersetzungselement
- 37: zweite Kupplung K2
- 38: Verfahren
- 40: Verfahrensschritt
- 42: Verfahrensschritt
- 43: Abszisse
- 45: Ordinate
- 47: Verbrennungskraftmaschine-Leistung
- 49: Systemleistung
- 51: Verbrennungskraftmaschine-Drehmoment
- 53: Systemdrehmoment
- 55: Abszisse
- 57: Ordinate
- 59, 60: Bereiche rein elektrischen Betriebs
- 61: Bereich serieller Hybridbetrieb
- 63: Bereich paralleler Hybridbetrieb
- 64: Fahrwiderstand bei Konstantgeschwindigkeitsfahrt
- 65: Fahrgeschwindigkeitsschwelle
- 67: Elektrischer-Betrieb-Schwelle
- 68: weitere Elektrischer-Betrieb-Schwelle
- 69: Parallelhybridbetrieb-Schwelle
- 71: maximale Ausgangsleistung der Verbrennungskraftmaschine
- 73: Boost-Bereich
- 75: obere Grenze für den seriellen Hybridbetrieb
- 77: Graph
- 79: Graph
- 81: Graph
- 83: Abszisse
- 85: Leistungskurve
- 87: Leistungskurve
- 89: Leistungskurve
- 91: Leistungskurve
- 93: Leistungskurve
- 95: Drehmomentkurve
- 97: Drehmomentkurve
- 99: Drehmomentkurve
- 101: Drehmomentkurve
- 103: Drehmomentkurve
- 105: Drehzahlkurve
- 107: Drehzahlkurve
- 109: Drehzahlkurve
- 111: Drehzahlkurve
- 113: Startdrehzahlschwelle
- 115: Zieldrehzahl serieller Hybridbetrieb
- 117: Graph
- 119: Graph
- 121: Graph
- 123: Leistungskurve
- 125: Leistungskurve
- 127: Leistungskurve
- 129: Leistungskurve
- 131: Leistungskurve
- 133: Drehmomentkurve
- 135: Drehmomentkurve
- 137: Drehmomentkurve
- 139: Drehmomentkurve
- 141: Drehmomentkurve
- 143: Drehzahlkurve
- 145: Drehzahlkurve
- 147: Drehzahlkurve
- 149: Drehzahlkurve
- 151: Zieldrehzahl für den parallelen Hybridbetrieb
- 153: Graph
- 155: Graph
- 157: Graph
- 159: Leistungskurve
- 161: Leistungskurve
- 163: Leistungskurve
- 165: Leistungskurve
- 167: Leistungskurve
- 169: Drehmomentkurve
- 173: Drehmomentkurve
- 175: Drehmomentkurve
- 177: Drehmomentkurve
- 179: Drehzahlkurve
- 181: Drehzahlkurve
- 183: Drehzahlkurve
- 185: Drehzahlkurve
- 187: Zieldrehzahl für den seriellen Hybridbetrieb

## Patentansprüche

1. Verfahren zum Betreiben einer Antriebseinrichtung (3, 203) eines Hybridfahrzeuges (1, 201) zum Antreiben eines Antriebsrads (15, 215), wobei die Antriebseinrichtung eine Verbrennungskraftmaschine (5, 205), eine mit der Verbrennungskraftmaschine gekoppelte erste Elektromaschine (9, 209), eine zweite Elektromaschine (11, 211), einen elektrischen Akkumulator (13, 213) und eine Hauptkupplung (17, K0) zwischen der Verbrennungskraftmaschine (5, 205) und dem Antriebsrad (15, 215) umfasst, wobei das Verfahren aufweist:
Betreiben der Antriebseinrichtung (3, 203) in einem ersten Betriebsmodus der folgenden drei Betriebsmodi:
einem rein elektrischen Betrieb, in dem ein auf das Antriebsrad (15, 215) wirkendes Fahrantriebsdrehmoment mittels der zweiten Elektromaschine (11, 211) bewirkt wird, während die Verbrennungskraftmaschine (5, 205) ausgeschaltet ist;
einem seriellen Hybridbetrieb, in dem die Verbrennungskraftmaschine (5, 205) die erste Elektromaschine (9, 209) zur Erzeugung von elektrischer Energie antreibt, welche von der zweiten Elektromaschine (11, 211) verwendet wird, um das Fahrantriebsdrehmoment zu bewirken;
einem parallelen Hybridbetrieb, in dem das Fahrantriebsdrehmoment mittels der Verbrennungskraftmaschine (5, 205) bewirkt wird; und
zumindest einmal Wechseln von dem ersten Betriebsmodus in einen zweiten
Betriebsmodus der drei Betriebsmodi,
wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht;
wobei, wenn der erste Betriebsmodus der rein elektrische Betrieb ist und der zweite Betriebsmodus der serielle Hybridbetrieb ist, das Wechseln aufweist:
bis zu einem ersten Zeitpunkt (t1) Betreiben der zweiten Elektromaschine (11, 211) im elektromotorischen Betrieb mit elektrischer Energie aus dem Akkumulator (13, 213);
ab dem ersten Zeitpunkt (t1) und zumindest bis zu einem zweiten Zeitpunkt (t2), ab dem eine Drehzahl der Verbrennungskraftmaschine (5, 205) eine Startdrehzahlschwelle (113) erreicht oder übersteigt, Betreiben der ersten Elektromaschine (9, 209) im elektromotorischen Betrieb zum Erzeugen eines Drehmoments, um eine Drehzahl der Verbrennungskraftmaschine (5, 205) zu erhöhen;
ab dem zweiten Zeitpunkt (t2) Zuführen von Kraftstoff an die Verbrennungskraftmaschine (5, 205);
ab einem dritten Zeitpunkt (t3), bei dem die Drehzahl der Verbrennungskraftmaschine (5, 205) eine Zieldrehzahl für den seriellen Betrieb erreicht oder übersteigt, Betreiben der ersten Elektromaschine (9, 209) im generatorischen Betrieb zum Erzeugen von elektrischer Energie;
zwischen dem dritten Zeitpunkt (t3) und einem vierten Zeitpunkt (t4) Betreiben der zweiten Elektromaschine (11, 211) im elektromotorischen Betrieb durch zeitlich abnehmende Zuführung von elektrischer Energie aus dem Akkumulator (13, 213) und zeitlich zunehmende Zuführung von mittels der Verbrennungskraftmaschine (5, 205) über die erste Elektromaschine (9, 209) erzeugter elektrischer Energie; und
ab dem vierten Zeitpunkt (t4) Betreiben der zweiten Elektromaschine (11, 211) im elektromotorischen Betrieb mit elektrischer Energie, die über die erste Elektromaschine (9, 209) mittels der Verbrennungskraftmaschine (5, 205) erzeugt wird.

2. Verfahren gemäß Anspruch 1, wobei das Verfahren ferner aufweist:
zwischen dem vierten Zeitpunkt (t4) und einem fünften Zeitpunkt (t5) Erhöhen der Leistungsabgabe der Verbrennungskraftmaschine (5, 205) auf eine Sollleistung, die um eine Lastpunkterhöhungsleistung oberhalb einer Sollantriebsleistung liegt, und ab dem fünften Zeitpunkt (t5) Laden des Akkumulators (13, 213) mit einer der Lastpunkterhöhungsleistung entsprechenden Ladeleistung.

3. Verfahren gemäß Anspruch 1 oder 2, wobei, wenn der erste Betriebsmodus der rein elektrische Betrieb ist und der zweite Betriebsmodus der parallele Hybridbetrieb ist, das Wechseln aufweist:
bis zu einem weiteren vierten Zeitpunkt (t4`) Offenhalten der Hauptkupplung (17, K0);
bis zu einem weiteren ersten Zeitpunkt (t1') Betreiben der zweiten Elektromaschine (11, 211) im elektromotorischen Betrieb mit elektrischer Energie aus dem Akkumulator (13, 213);
ab dem weiteren ersten Zeitpunkt (t1`) und zumindest bis zu einem weiteren zweiten Zeitpunkt (t2`), ab dem eine Drehzahl der Verbrennungskraftmaschine (5, 205) eine Startdrehzahlschwelle erreicht oder übersteigt, Betreiben der ersten Elektromaschine (9, 209) im elektromotorischen Betrieb zum Erzeugen eines Drehmoments, um eine Drehzahl der Verbrennungskraftmaschine (5, 205) zu erhöhen;
ab dem weiteren zweiten Zeitpunkt (t2`) Zuführen von Kraftstoff an die Verbrennungskraftmaschine (5, 205);
ab einem weiteren dritten Zeitpunkt (t3'), bei dem die Drehzahl der Verbrennungskraftmaschine eine Zieldrehzahl (151) für den parallelen Hybridbetrieb erreicht oder übersteigt, Betreiben der ersten Elektromaschine (9, 209) im generatorischen Betrieb;
bis zu dem weiteren vierten Zeitpunkt (t4`) Betreiben der ersten Elektromaschine im generatorischen Betrieb, um die Drehzahl der Verbrennungskraftmaschine auf die Zieldrehzahl für den parallelen Hybridbetrieb zu bringen, falls zum weiteren dritten Zeitpunkt (t3`) die Drehzahl der Verbrennungskraftmaschine die Zieldrehzahl für den parallelen Hybridbetrieb übersteigt;
bei dem weiteren vierten Zeitpunkt (t4`) Schließen der Hauptkupplung (17, K0);
ab dem weiteren vierten Zeitpunkt (t4`) Betreiben der Verbrennungskraftmaschine (5, 205) mit der Zieldrehzahl (151) für den parallelen Hybridbetrieb;
zwischen dem weiteren vierten Zeitpunkt (t4`) und einem weiteren fünften Zeitpunkt (t5`) Erzeugen des Fahrantriebsdrehmoments zeitlich zunehmend durch von der Verbrennungskraftmaschine (5, 205) erzeugtem Drehmoment und zeitlich abnehmend durch von der zweiten Elektromaschine (11, 211) erzeugtem Drehmoment;
ab dem weiteren fünften Zeitpunkt (t5`) Erzeugen des Fahrantriebsdrehmoments ausschließlich mittels der Verbrennungskraftmaschine (5, 205).

4. Verfahren gemäß Anspruch 3, wobei das Verfahren ferner aufweist:
ab dem weiteren fünften Zeitpunkt Erhöhen der Leistung der Verbrennungskraftmaschine (5, 205) um eine Lastpunkterhöhungsleistung über eine Sollantriebsleistung hinaus und Laden des Akkumulators (13, 213) mit einer der Lastpunkterhöhungsleistung entsprechenden Ladeleistung.

5. Verfahren gemäß einem der vorangehenden Ansprüche, wobei, wenn der erste Betriebsmodus der parallele Hybridbetrieb ist und der zweite Betriebsmodus der serielle Hybridbetrieb ist, das Wechseln aufweist:
bis zu einem noch weiteren ersten Zeitpunkt (t1") bei geschlossener Hauptkupplung (17, K0) Erzeugen des Fahrantriebsdrehmoments mittels der Verbrennungskraftmaschine (5, 205), während die zweite Elektromaschine (11, 211) ausgeschaltet ist;
ab dem noch weiteren ersten Zeitpunkt (t1 ") bis zu einem noch weiteren zweiten Zeitpunkt (t2") Betreiben der ersten Elektromaschine (9, 209) im generatorischen Betrieb, um eine zeitlich zunehmende elektrische Energie zu erzeugen;
Verwenden der zeitlich zunehmenden elektrischen Energie, um mittels der zweiten Elektromaschine (11, 211) ein zeitlich zunehmendes Drehmoment auf das Antriebsrad (15, 215) zu übertragen;
bei dem noch weiteren zweiten Zeitpunkt (t2") Öffnen der Hauptkupplung (17, K0);
ab dem noch weiteren zweiten Zeitpunkt (t2") Erzeugen des Fahrantriebsdrehmoments ausschließlich mittels der zweiten Elektromaschine (11, 211).

6. Verfahren gemäß Anspruch 5, wobei das Verfahren ferner aufweist:
zwischen dem noch weiteren zweiten Zeitpunkt (t2") und einem noch weiteren dritten Zeitpunkt (t3") Verändern der Drehzahl der Verbrennungskraftmaschine (5, 205), um eine Zieldrehzahl (115) für den seriellen Betrieb zu erreichen.

7. Verfahren gemäß einem der vorangehenden Ansprüche,
wobei die Antriebseinrichtung (3, 203) eine Hauptkupplung (17, K0) umfasst, die zwischen der Verbrennungskraftmaschine (5, 205) und dem Antriebsrad (15, 215) angeordnet ist, wobei die Hauptkupplung (17, K0) im rein elektrischen Betrieb und/oder im seriellen Hybridbetrieb geöffnet wird, und/oder
wobei die Antriebseinrichtung (3, 203) eine erste Kupplung (27, K1) umfasst, die zwischen der ersten Elektromaschine (9, 209) und der Verbrennungskraftmaschine (5, 205) angeordnet ist, wobei die erste Kupplung (27, K1) im rein elektrischen Betrieb geöffnet wird und/oder im parallelen Hybridbetrieb geöffnet werden kann, und/oder
wobei die Antriebseinrichtung eine zweite Kupplung (37, K2) umfasst, die zwischen der zweiten Elektromaschine (11, 211) und dem Antriebsrad (15, 215) angeordnet ist, wobei die zweite Kupplung (37, K2) im parallelen Hybridbetrieb geöffnet wird.

8. Verfahren gemäß einem der vorangehenden Ansprüche 1, 2, 5 oder 6, wobei der Wechsel in den seriellen Hybridbetrieb nur durchgeführt wird,
falls sowohl die Fahrgeschwindigkeit unterhalb einer Fahrgeschwindigkeitsschwelle (65) liegt als auch eine Sollantriebsleistung und/oder ein Sollantriebsdrehmoment oberhalb einer Elektrischer-Betrieb-Schwelle (67) liegt,
oder falls sowohl die Fahrgeschwindigkeit oberhalb einer Fahrgeschwindigkeitsschwelle (65) liegt als auch eine Sollantriebsleistung und/oder ein Sollantriebsdrehmoment oberhalb einer Parallelhybridbetrieb-Schwelle (69, 71) liegt,
wobei bei Betreiben der Antriebseinrichtung (3, 203) im seriellen Hybridbetrieb die Verbrennungskraftmaschine (5, 205) an einem Arbeitspunkt (93) basierend auf einem kombinierten Wirkungsgrad, welcher von dem Wirkungsgrad der Verbrennungskraftmaschine (5, 205) und von dem Wirkungsgrad der ersten Elektromaschine (9, 209) abhängt, betrieben wird.

9. Hybridfahrzeug (1, 201), aufweisend:
eine Antriebseinrichtung (3, 203) zum Antreiben eines Antriebsrads (15, 215) des Hybridfahrzeuges, wobei die Antriebseinrichtung eine Verbrennungskraftmaschine (5, 205), eine mit der Verbrennungskraftmaschine (5, 205) gekoppelte erste Elektromaschine (9, 209), eine zweite Elektromaschine (11, 211), einen elektrischen Akkumulator (13, 213) und eine Hauptkupplung (17, K0) zwischen der Verbrennungskraftmaschine und dem Antriebsrad umfasst; und
eine Antriebseinrichtungssteuerung (6, 206), welche ausgebildet ist, ein Verfahren gemäß einem der vorangehenden Ansprüche auszuführen oder zu steuern.
